# EUROPEAN PATENT APPLICATION

(11) **EP 1 838 067 A2**
(43) Date of publication of application: **26.09.2007**
(21) Application number: 06254016.6
(22) Date of filing: 31.07.2006
(51) Int. Cl.: H04L 29/06

(54) **Voice-quality evaluating system, communication system, test management apparatus, and test communication apparatus**

(30) Priority: 24.03.2006 JP 2006083943
(71) Applicant: Fujitsu Ltd., Kawasaki-shi, Kanagawa 211-8588 (JP)
(72) Inventor: Kimura, Nobuko c/o Fujitsu Limited, Kawasaki-shi Kanagawa 211-8588 (JP); Mizuta, Kazuo c/o Fujitsu Limited, Kawasaki-shi Kanagawa 211-8588 (JP); Takebayashi, Ken c/o Fujitsu Limited, Kawasaki-shi Kanagawa 211-8588 (JP); Nishida, Hiroshi c/o Fujitsu Limited, Kawasaki-shi Kanagawa 211-8588 (JP)
(74) Representative: Stebbing, Timothy Charles

(57) **Abstract**

A voice-quality evaluating system, in a secure network that allows a voice packet to pass, transmits and receives communication information for a voice quality testing between a test management apparatus (100) and a test communication apparatus (200, 400) connected to the network and between the test communication apparatuses (200, 400), for the voice quality testing between the test communication apparatuses arranged on the network. The voice-quality evaluating system embeds the communication information in a payload of the voice packet, and transmits and receives communication-information-embedded voice packet. In this way, blockage of TCP packets in the network, e.g. by firewalls, is overcome by using the communication-information-embedded voice packets such as RTP packets.

## Description

The present invention relates to a technology for transmitting and receiving voice information for a voice-quality test between a test management apparatus and a test communication apparatus and between test communication apparatuses in a network for transmitting and receiving voice packets to perform a voice-call communication.

In recent years, a voice communication system using the Internet (Internet telephony, VoIP) has become widespread. In such a voice communication system, since it is possible to build the system at relatively low cost, it is possible to provide a voice communication service inexpensively.

It is necessary to perform various tests to measure a voice quality in such a voice communication system. Such tests are called voice quality testing (VQT). As a method for such tests, for example, a voice-quality measuring method capable of measuring an influence that the Internet has on voice quality by comparing a signal before being input to the Internet and a signal after passing through the Internet is disclosed in Japanese Patent Application Laid-Open No. 2004-297803.

Security in the Internet is becoming more and more important. In particular, it is necessary to distinguish terminal apparatuses, which are permitted to make connection to the Internet, and exclude illegal connection from terminal apparatuses. As such a method, for example, a session-start-protocol system that extends and uses a session initial protocol (SIP) for permitting start of a session (connection) based on a uniform resource indicator (URI) serving as position specifying information for terminals is disclosed in Published Japanese Translation of PCT Patent Application No. 2004-523828.

However, in the conventional technology disclosed in Japanese Patent Application Laid-Open No. 2004-297803, in a voice communication system recently introduced in which a network is set to allow only a real-time transport protocol (RTP) packet to pass on a transmission path based on a security policy, it is impossible to allow control information for voice quality testing transmitted and received by packets according to a protocol different from the RTP such as a transmission control protocol (TCP) to pass.

Therefore, to perform voice quality testing in the voice communication system in recent years with a further improved security level, it is necessary to change a structure and setting of the network. This not only causes an increase in work procedures but also causes a problem of deterioration in security.

In the conventional technology disclosed in Published Japanese Translation of PCT Patent Application No. 2004-523828, since the extension of the SIP is involved, specifications of conventional apparatuses and networks conforming to the SIP have to be changed. The burden of cost involved in this change poses a problem.

Therefore, even if the conventional technologies are combined, it is impossible to exclude connection from terminal apparatuses, which are not permitted to make connection, without changing specifications of the conventional apparatuses and networks and perform voice quality testing without changing structures and settings of a network of a voice communication system.

The present invention has been made in view of the problems in the conventional technology.

A voice-quality evaluating system according to one aspect of the present invention, in a secure network that allows a voice packet to pass, transmits and receives communication information for a voice quality testing between a test management apparatus and a test communication apparatus connected to the network and between the test communication apparatuses, for the voice quality testing between the test communication apparatuses arranged on the network. The voice-quality evaluating system embeds the communication information in a payload of the voice packet, and transmits and receives communication-information-embedded voice packets.

A communication system according to another aspect of the present invention, in a secure network that allows a voice packet to pass, transmits and receives intersystem communication information between apparatuses connected to the network. The communication system embeds the intersystem communication information in a payload of the voice packet and transmits and receives intersystem-communication-information-embedded voice packets.

A test management apparatus according to still another aspect of the present invention manages voice quality testing between test communication apparatuses arranged on a network for transmitting and receiving a voice packet to perform communication for a voice call. The test management apparatus embeds communication information for the voice quality testing in a payload of the voice packet, and transmits communication-information-embedded voice packets.

A test communication apparatus according to still another aspect of the present invention is for performing voice quality testing on a network that transmits and receives a voice packet and performs communication for a voice call. The test communication apparatus embeds communication information for the voice quality testing in a payload of the voice packet communication-information-embedded voice packet to other test communication apparatus.

The above and other features, advantages and technical and industrial significance of this invention will be better understood by reading the following detailed description of presently preferred embodiments of the invention, when considered in connection with the accompanying drawings, in which:
Fig. 1 is a schematic for illustrating an overview of a problem of a voice evaluation test in a voice-only network;
Fig. 2 is a schematic for illustrating an overview of an RTP-packetization of a TCP packet;
Fig. 3 is a schematic for illustrating a method of using the RTP packet.
Fig. 4 is a schematic for illustrating an overview of the voice evaluation test in the voice-only network according to the present invention;
Fig. 5 is a schematic for illustrating a network structure of a voice-evaluation test system in the voice-only network;
Fig. 6 is a block diagram of a test management apparatus according to a first embodiment of the present invention;
Fig. 7 is a block diagram of a probe according to the first embodiment;
Fig. 8 is a sequence diagram of a test-scenario transmission processing according to the first embodiment;
Fig. 9 is a sequence diagram of an RTP-test-packet transmission processing according to the first embodiment;
Fig. 10 is a sequence diagram of a test-result transmission processing according to the first embodiment;
Fig. 11 is a block diagram of a test management apparatus according to a second embodiment of the present invention;
Fig. 12 is a block diagram of a probe according to the second embodiment;
Fig. 13 is a sequence diagram of a test suspension processing between a test management apparatus and the probe on the test-packet transmission side according to the second embodiment;
Fig. 14 is a sequence diagram of a test suspension processing between the probe on the test-packet transmission side and the probe on the test-packet reception side according to the second embodiment;
Fig. 15 is a block diagram of a test management apparatus according to a third embodiment of the present invention;
Fig. 16 is a block diagram of a probe according to the third embodiment;
Fig. 17 is a sequence diagram of a test resumption processing between a test management apparatus and the probe on the test-packet transmission side according to the third embodiment;
Fig. 18 is a sequence diagram of a test resumption processing between the probe on the test-packet transmission side and the probe on the test-packet reception side according to the third embodiment;
Fig. 19 is a block diagram of a test management apparatus according to a fourth embodiment of the present invention;
Fig. 20 is a block diagram of a probe according to the fourth embodiment;
Fig. 21 is a sequence diagram of a time synchronization processing according to the fourth embodiment;
Fig. 22 is a block diagram of a test management apparatus according to a fifth embodiment of the present invention;
Fig. 23 is a block diagram of a probe according to the fifth embodiment;
Fig. 24 is a sequence diagram of a firmware update processing according to the fifth embodiment;
Fig. 25 is a sequence diagram of an RTP-test-packet partial-retransmission processing according to a sixth embodiment of the present invention;
Fig. 26 is a sequence diagram of an RTP-test-packet entire-retransmission processing according to the sixth embodiment;
Fig. 27 is a block diagram of a test management apparatus according to a seventh embodiment of the present invention;
Fig. 28 is a table concerning the protocol type selection according to the seventh embodiment;
Fig. 29 is a flowchart of the protocol selection processing procedure according to the seventh embodiment;
Fig. 30 is a block diagram of a test management apparatus according to an eighth embodiment of the present invention; and
Fig. 31 is a sequence diagram of an RTP-session-start negotiation processing according to the eighth embodiment.

Exemplary embodiments of the present invention are explained in detail below with reference to the accompanying drawings. In the embodiments described below, the present invention is applied to a voice-quality evaluating system, a communication system, a test management apparatus, and a test communication apparatus in a network for transmitting and receiving an RTP packet, which is a voice packet, to perform communication for a voice call. The voice packet is not limited to the RTP and may be a packet for generally transmitting voice.

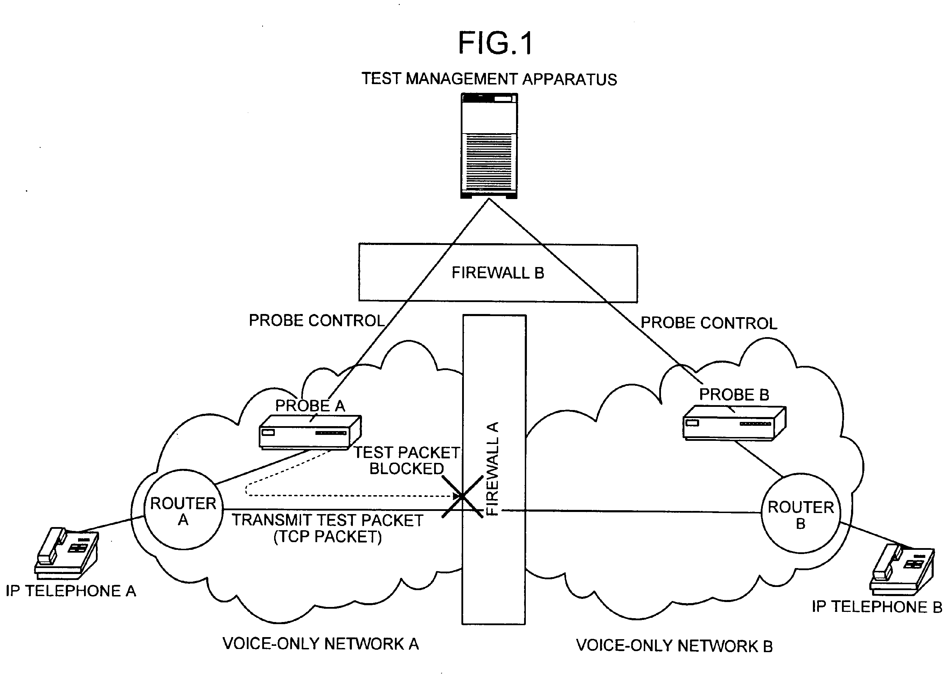

Fig. 1 is a schematic for illustrating an overview of a problem of a voice evaluation test in a voice-only network. As shown in the figure, a voice-only network A in which a router A, to which a probe A and an IP telephone A are connected, is arranged and a voice-only network B in which a router B, to which a probe B and an IP telephone B are connected, is arranged are connected to each other with a firewall A as a boundary. A probe is a test communication apparatus and is a measurement base for voice quality evaluation.

A test management apparatus (manager) that manages voice quality evaluation performed between the probe A and the probe B is connected to the probe A and the probe B with a firewall B as a boundary. The test management apparatus performs probe control.

The voice-only network A and the voice-only network B are voice-only networks for transmitting an RTP packet. Thus, the firewall A permits passage of only the RTP packet and is set not to permit passage of packets of kinds other than the RTP packet. The firewall B only limits passage between the test management apparatus and the probes. Thus, the firewall B is not set to permit passage of only the RTP packet.

When voice quality evaluation is performed in such a network, in general, packets different from the RTP packet such as a TCP packet based on socket communication is used for communication information for the voice quality evaluation. Thus, when the network is set as described above, the TCP packet is transmitted and received between the test management apparatus and the probes A and B beyond the firewall B. However, it is impossible to transmit and receive the TCP packet between the probe A and the probe B beyond the firewall A. Therefore, for example, even if a test packet of the TCP packet for the voice quality evaluation is transmitted from the probe A to the probe B, the test packet is blocked by the firewall A.

In this way, in a network, transmission and reception of control information is generally performed according to intersystem communication. However, there is a problem in that, when the network is a voice-only network and a transmission path of the intersystem communication permits transmission of only the RTP packet according to a security policy or the like, it is impossible to perform the voice quality evaluation.

For example, when a plurality of probes are arranged in a service network zone (an access network and a core router network) of a voice-only network and exchange a test packet among the probes to perform the voice quality evaluation, protocols other than the RTP packet may be regulated according to the security policy to prevent illegal access to the core router network. A firewall is arranged in a boundary of the core router network and the access network to prevent packets other than voice packets (namely, non-RTP packets) from passing through the firewall.

In this case, since measured data at the time of transmission and reception of the test packet is not a voice packet, the measured data is communicated as a TCP packet. However, since the TCP packet cannot pass through the firewall according to the security policy, there is a problem in that it is impossible to perform the voice quality evaluation. The present invention has been devised to allow the test packet to pass through the firewall and make it possible to perform the voice quality evaluation.

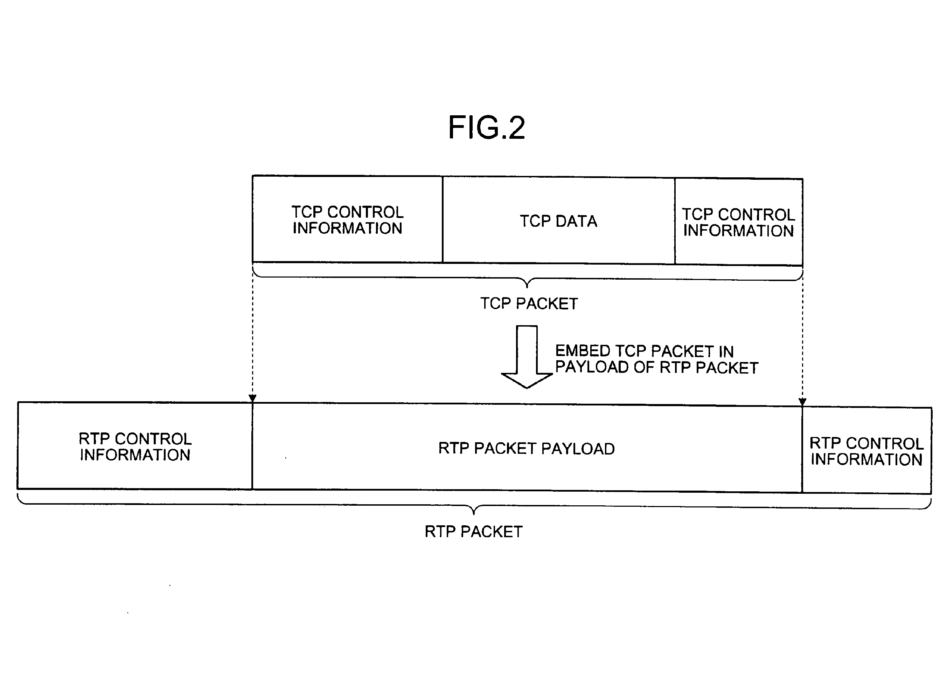

In order to solve the problem illustrated in Fig. 1, in an embodiment of the present invention, RTP-packetization of a TCP packet is performed. Fig. 2 is a schematic for illustrating an overview of the RTP-packetization of the TCP packet. As shown in the figure, a test packet, which is a TCP packet, is embedded in a payload of a RTP packet to allow various kinds of information for voice quality evaluation included in the test packet to pass through a firewall.

The TCP packet is a packet obtained by adding TCP control information in front of and behind TCP data. The entire TCP packet is regarded as data and embedded in the payload of the RTP packet. By adding RTP control information in front of and behind the data of the RTP payload, which is the TCP packet, an RTP packet including the various kinds of information for the voice quality evaluation included in the test packet is generated.

Although Fig. 2 is a schematic for explaining the overview of the RTP-packetization of the TCP packet performed according to a first embodiment of the present invention, only the TCP data needs to be embedded in the payload of the RTP packet; there is no need to add the TCP control information.

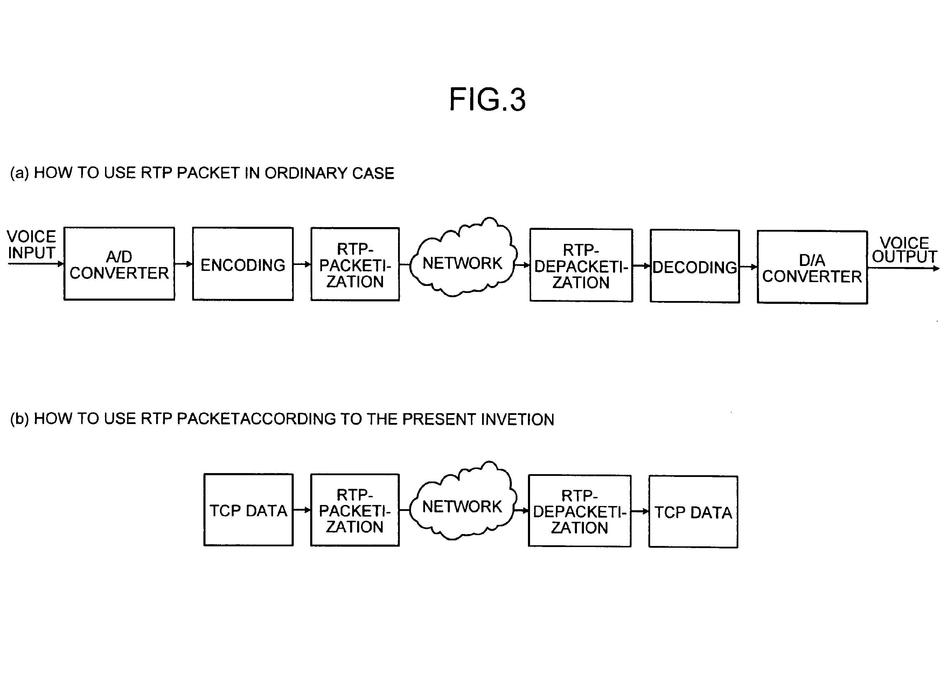

Fig. 3 is a schematic for illustrating a method of using the RTP packet generated by the RTP-packetization of the TCP packet: (a) is a diagram of how to use the RTP packet in an ordinary case; and (b) is a diagram of how to use the RTP packet according to the present invention.

As shown in (a) of Fig. 3, usually, a voice input subjected to digital conversion by an A/D converter and encoded is RTP-packetized. When this RTP packet is received via a network, the RTP packet is RTP-depacketized according to a procedure opposite to that of the RTP-packetization. This depacketized packet is decoded, subjected to analog conversion by a D/A converter, and output.

On the other hand, as shown in (b) of Fig. 3, according to the present invention, when TCP data RTP-packetized is received via the network, the RTP packet is RTP-depacketized to extract the TCP data.

In this way, the RTP packet handled by means of the present invention includes not only an RTP packet obtained by RTP-packetizing voice but also an RTP packet obtained by RTP-packetizing TCP data, which is originally a TCP packet, and transmitted and received.

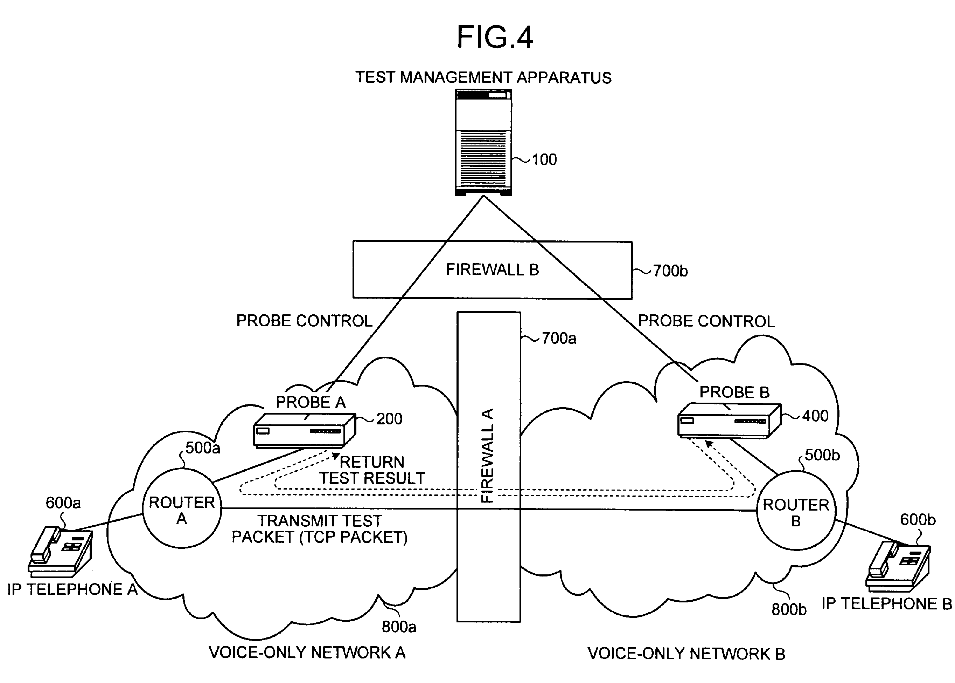

It is possible to perform a voice evaluation test using the RTP packet obtained by RTP-packetizing the TCP packet as described above. Fig. 4 is a schematic for illustrating an overview of the voice evaluation test in the voice-only network according to the present invention. As shown in the figure, a voice-only network A 800a in which a router A 500, to which a probe A 200 and an IP telephone A 600a are connected, is arranged and a voice-only network B 800b in which a router B 500b, to which a probe B 400 and an IP telephone B 600b are connected, is arranged are connected to each other with a firewall A 700a as a boundary.

A test management apparatus 100 that manages voice quality evaluation performed between the probe A 200 and the probe B 400 is connected to the probe A 200 and the probe B 400 with a firewall B 700b as a boundary.

Communication of control information between the test management apparatus 100 and the probe A 200 and the probe B 400 is performed using a TCP packet. Since the firewall B 700b permits passage of the TCP packet, it is possible to exchange the control information between the test management apparatus 100 and the probe A 200 and the probe B 400 beyond the firewall B.

However, the firewall A 700a present between the probe A 200 and the probe B 400 is set to permit passage of only an RTP packet without permitting passage of the TCP packet. Therefore, communication of control information between the probe A 200 and the probe B 400 is not performed using the TCP packet. However, by RTP-packetizing the TCP packet as described above, the control information can pass the firewall A 700a using the RTP packet. For example, when a test packet RTP-packetized is transmitted from the probe A 200 to the probe B 400, the probe B 400 receives the test packet, RTP-packetizes a rest result, and returns the test result to the probe A 200. In this way, it is possible to perform voice quality evaluation between probes arranged in service network zones of voice-only networks.

As described above, the voice-quality evaluating system according to the present invention is characterized in that data is embedded in a payload of a voice packet to make it possible to transmit and receive the data even under an environment in which communication of protocols other than a voice packet is regulated according to a security policy.

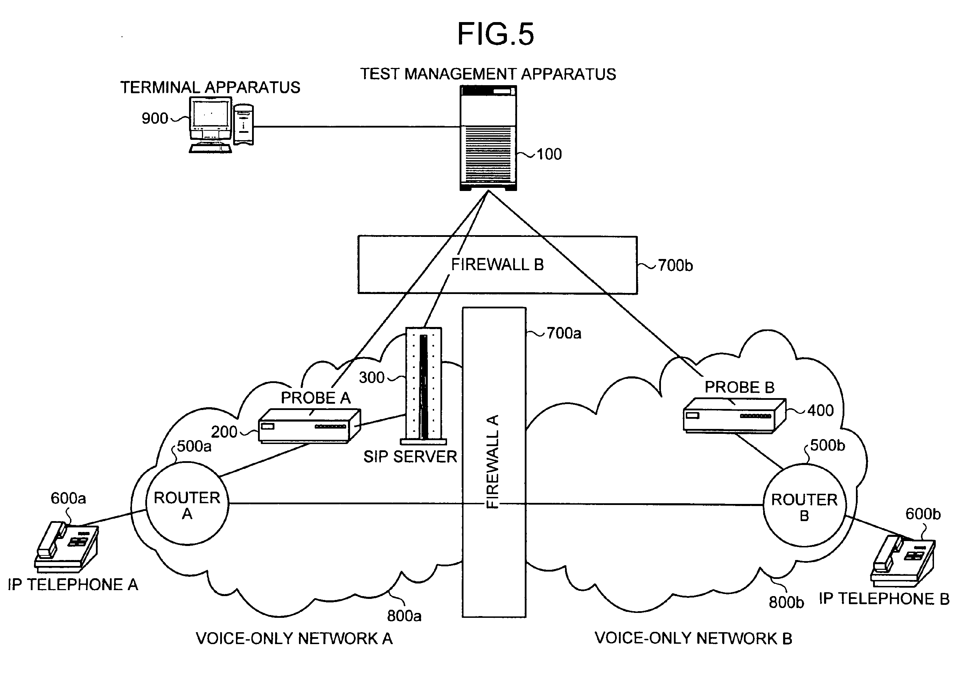

Fig. 5 is a schematic for illustrating a network structure of the voice-evaluation test system in the voice-only network according to the present invention. As shown in the figure, the voice-only network A 800a in which the router A 500, to which the probe A 200 and the IP telephone A 600a are connected, is arranged and the voice-only network B 800b in which the router B 500b, to which the probe B 400 and the IP telephone B 600b are connected, is arranged are connected to each other with the firewall A 700a as a boundary.

The test management apparatus 100 that manages voice quality evaluation performed between the probe A 200 and the probe B 400 is connected to the probe A 200 and the probe B 400 with the firewall B 700b as a boundary.

The test management apparatus 100 performs management of the probes, performs management of a test scenario, performs judgment of a test-packet transmission side probe defined in the test scenario, performs transmission of the test scenario to the probe A 200 serving as the transmission side probe, receives a voice evaluation result from the probe A 200, and performs storage and management of the voice evaluation result.

The probe A 200 receives a test scenario described later from the test management apparatus 100, transmits test start information (unit of output of a trigger for test start and measured data of a test), transmits a test packet to the probe B 400 based on information defined by the test scenario, receives measured data from the probe B 400, judges a voice evaluation result based on the measured data received from the probe B 400 and the test scenario, and transmits the voice evaluation result to the test management apparatus 100.

The probe B 400 receives the test start information from the probe A 200, receives the test packet from the probe A 200, stores the number of packet losses of the test packet received, a reception interval, and the number of times of reception as measured data, and transmits the measured data stored to the probe A 200.

Moreover, in the voice-only network A 800a, a session initial protocol (SIP) server 300 is arranged between the test management apparatus 100 and the probe A 200. The SIP server 300 receives SIP signaling based on a session initial protocol-uniform resource indicator (SIP-URI) indicating positional (network location) information of the apparatus and performs communication start negotiation between the test management apparatus 100 and the probe A 200. The SIP server 300 receives the SIP signaling and performs communication end negotiation between the test management apparatus 100 and the probe A 200. The SIP signaling is in the form of a packet based on the SIP.

At least one terminal apparatus 900 is connected to the test management apparatus 100 via a local area network (LAN). The terminal apparatus 900 provides an interface for an operator of a voice-evaluation test system to perform operation of the voice-evaluation test system. Specifically, the interface is a graphical user interface (GUI). The interface is an interface for the operator to register a test scenario, input control for suspension, resumption, and the like of a voice evaluation test, and check a voice evaluation result.

In the test scenario, a test section decided by designating a test-packet transmission side probe and a test-packet reception side probe, a test start date and time, a test end date and time, a packet length of a test packet, a transmission interval of the test packet, the number of times of transmission of the test packet, and the like are designated.

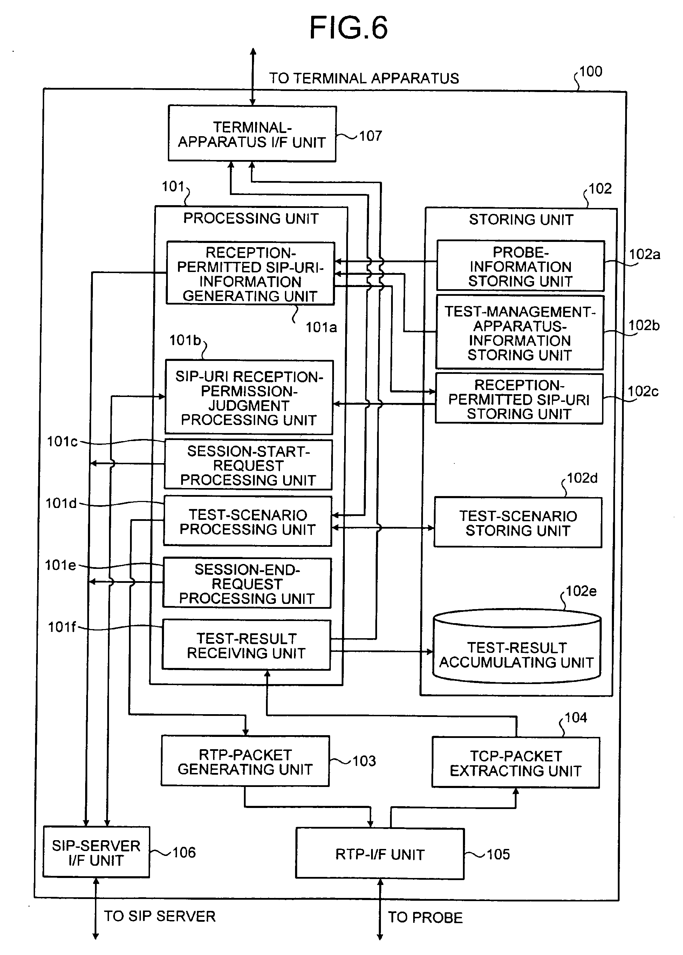

Fig. 6 is a block diagram of the test management apparatus 100 according to the first embodiment. As shown in the figure, the test management apparatus 100 includes a processing unit 101 that manages control of the test management apparatus 100 and executes various kinds of processing related to a voice evaluation test, a storing unit 102 that stores various kinds of information in advance and stores a voice evaluation result, an RTP-packet generating unit 103 that RTP-packetizes a TCP packet, a TCP-packet extracting unit 104 that extracts a TCP packet from an RTP packet, an RTP-I/F unit 105 that transmits an RTP packet passed from the RTP-packet generating unit 103 to the outside and passes an RTP packet received from the outside to the TCP-packet extracting unit 104, a SIP-server I/F unit 106 that manages communication between the test management apparatus 100 and the SIP server 300, and a terminal-apparatus I/F unit 107 that manages communication with the terminal apparatus 900.

The processing unit 101 further includes a reception-permitted SIP-URI information generating unit 101a that generates SIP-URI information of apparatuses permitted to receive information from probe information and test management apparatus information stored in the storing unit 102 and transmits the SIP-URI information to the SIP server 300 as required, a SIP-URI reception-permission-judgment processing unit 101b that judges, based on information on reception-permitted SIP-URI stored in the storing unit 102, whether SIP-URI information received from the SIP server 300 is SIP-URI information for permitting reception, a session-start-request processing unit 101c that requests the SIP server 300 to start a session with the test-packet transmission side probe, a test-scenario processing unit 101d that transmits a test scenario registered from the GUI or stored in the storing unit 102 to the transmission side probe and registers a test scenario received from the test management apparatus 100 in the storing unit 102, a session-end-request processing unit 101e that requests the SIP server 300 to end the session with the transmission side probe, and a test-result receiving unit 101f that stores a test result received from the transmission side probe in the storing unit 102 and causes the GUI of the terminal apparatus 900 to display the test result.

The storing unit 102 further includes a probe-information storing unit 102a that stores probe information, a test-management-apparatus-information storing unit 102b that stores test management apparatus information, a reception-permitted SIP-URI storing unit 102c that stores a SIP-URI of apparatuses permitted to receive information, a test-scenario storing unit 102d that stores a test scenario, and a test-result accumulating unit 102e that stores a test result received from a reception side probe of the test packet.

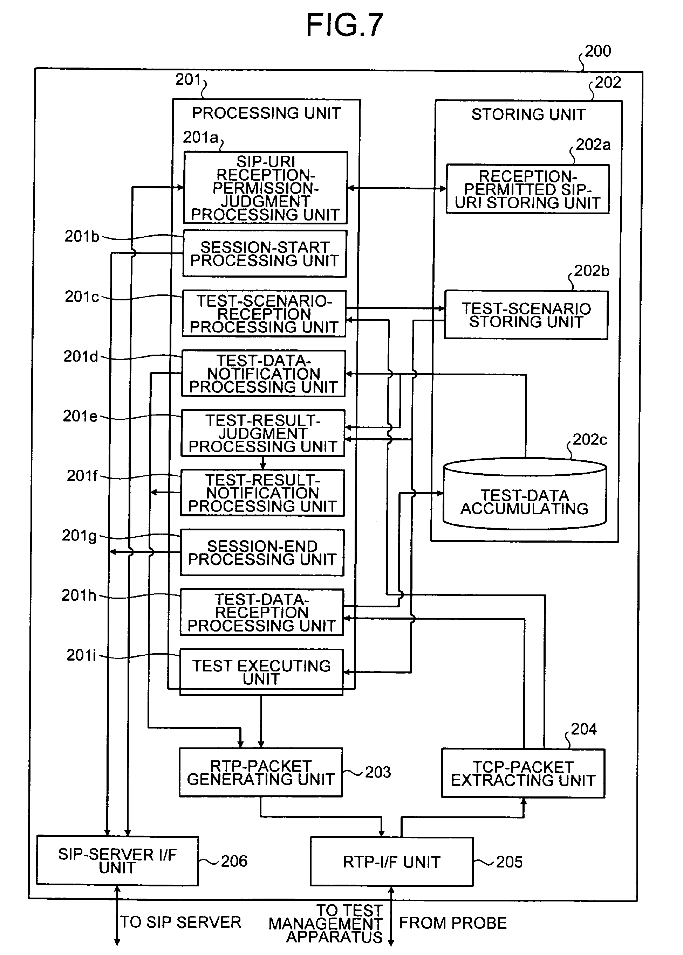

Fig. 7 is a block diagram of the probe A 200 according to the first embodiment. As shown in the figure, the probe A 200 includes a processing unit 201 that manages processing of the probe A 200 and executes various kinds of processing related to a voice evaluation test, a storing unit 202 that stores various kinds of information in advance and stores test data, which is measured data of the voice evaluation test, an RTP-packet generating unit 203 that RTP-packetizes a TCP packet, a TCP-packet extracting unit 204 that acquires, when an RTP packet is a test packet, data such as a packet length, a reception interval, and the number of times of reception of the RTP packet as test data and extracts, when an RTP packet is not a test packet, a TCP packet from the RTP packet, an RTP-I/F unit 205 that transmits an RTP packet passed from the RTP-packet generating unit 203 to the outside and passes an RTP packet received from the outside to the TCP-packet extracting unit 204, and a SIP-server I/F unit 206 that manages communication between the probe A 200 and the SIP server 300.

The processing unit 201 further includes a SIP-URI reception-permission-judgment processing unit 201a that judges, based on information on a reception-permitted SIP-URI stored in the storing unit 202, whether SIP-URI information of the test-packet transmission side probe received from the SIP server 300 is SIP-URI information for permitting reception, a session-start processing unit 201b that starts a session with the reception side probe of the test packet based on a session start request from the SIP server 300, a test-scenario-reception processing unit 201c that stores a test scenario received from the SIP server 300 in the storing unit 202, a test-data-notification processing unit 201d that notifies the test-packet transmission side probe of test data stored in the storing unit 202, a test-result-judgment processing unit 201e that judges a test result based on the test data and the test scenario stored in the storing unit 202, a test-result-notification processing unit 201f that notifies the test-packet transmission side probe of a result of the judgment by the test-result-judgment processing unit 201e, a session-end processing unit 201g that ends the session with the reception side probe of the test packet based on a request for session end from the SIP server 300, a test-data-reception processing unit 201h that stores test data received from the reception side probe in the storing unit 202, and a test executing unit 201i that executes a test based on the test scenario stored in the storing unit 202.

The test result judged by the test-result-judgment processing unit 201e includes a packet delay, a packet loss, a jitter value, and an R value.

The storing unit 202 further includes a reception-permitted SIP-URI storing unit 202a that stores a SIP-URI of apparatuses permitted to receive information, a test-scenario storing unit 202b that stores a test scenario, and a test-data accumulating unit 202c that stores test data received from the reception side probe of the test packet.

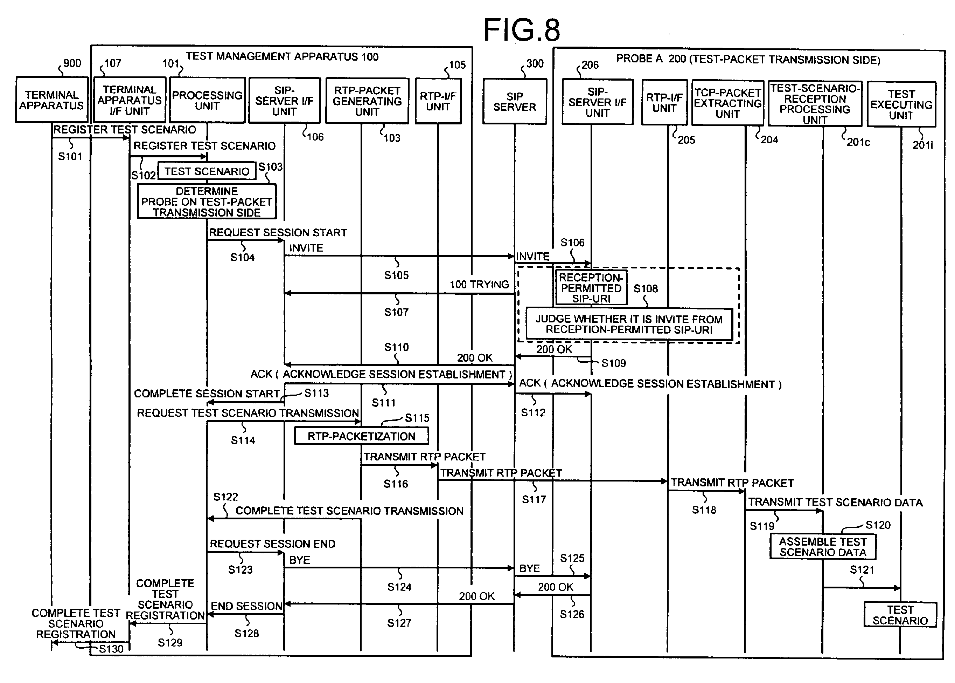

Fig. 8 is a sequence diagram of the test-scenario transmission processing according to the first embodiment. The probe A 200 is set as a test-packet transmission side probe. As shown in the figure, a test scenario is input from the terminal apparatus 900 (step S101). The processing unit 101 registers the test scenario received via the terminal-apparatus I/F unit 107 of the test management apparatus 100 in the storing unit 102 (step S102).

The processing unit 101 determines a test-packet transmission side probe based on the test scenario (step S103) and requests the SIP server 300 to start a session with the transmission side probe (steps S104 and S105). In response to this request, the SIP server 300 transmits the request to the probe A 200 (step S106) and notifies the test management apparatus 100 that the request is received (step S107).

In the probe A 200, the SIP-URI reception-permission-judgment processing unit 201a judges, based on the reception-permitted SIP-URI stored, whether the request is a request from a SIP-URI permitted to receive information (step S108). The SIP-URI reception-permission-judgment processing unit 201a transmits information on permission of reception to the test management apparatus 100 through the SIP server 300 (steps S109 and S110). The test management apparatus 100, which has received this information on permission of reception, transmits ACK (acknowledgment of session establishment) to the probe A 200 through the SIP server 300 (steps S111 and S112).

The processing unit 101 detects completion of the session start (step S113) and, then, outputs a request for test scenario transmission (step S114). The processing unit 101 RTP-packetizes this test scenario (step S115) and transmits the RTP packet to the probe A 200 (steps S116 and S117). In the probe A 200, which has received the test scenario, the test scenario received is transmitted to the TCP-packet extracting unit 204 (step S118). The test scenario RTP-depacketized by the TCP-packet extracting unit 204 is transmitted to the test-scenario-reception processing unit 201c (step S119).

The test-scenario-reception processing unit 201c assembles a test scenario from a sequence of the test scenario received (step S120) and transmits this test scenario to the test executing unit 201i (step S121).

When the transmission of the test scenario ends, the processing unit 101 detects completion of the test scenario transmission (step S122). Subsequently, the processing unit 101 transmits a request for session end to the probe A 200 through the SIP server 300 (steps S123, S124, and S125).

When the probe A 200 receives the request for session end, the probe A 200 transmits information on permission of session end to the test management apparatus 100 through the SIP server 300 (steps S126 and S127). Finally, the processing unit 101 detects this information on permission of session end (step S128). When the processing unit 101 detects the session end, the processing unit 101 transmits information on completion of test scenario registration to the terminal apparatus 900 via the terminal-apparatus I/F unit 107 (steps S129 and S130). In this way, the processing for registering the test scenario in the probe A 200 is completed.

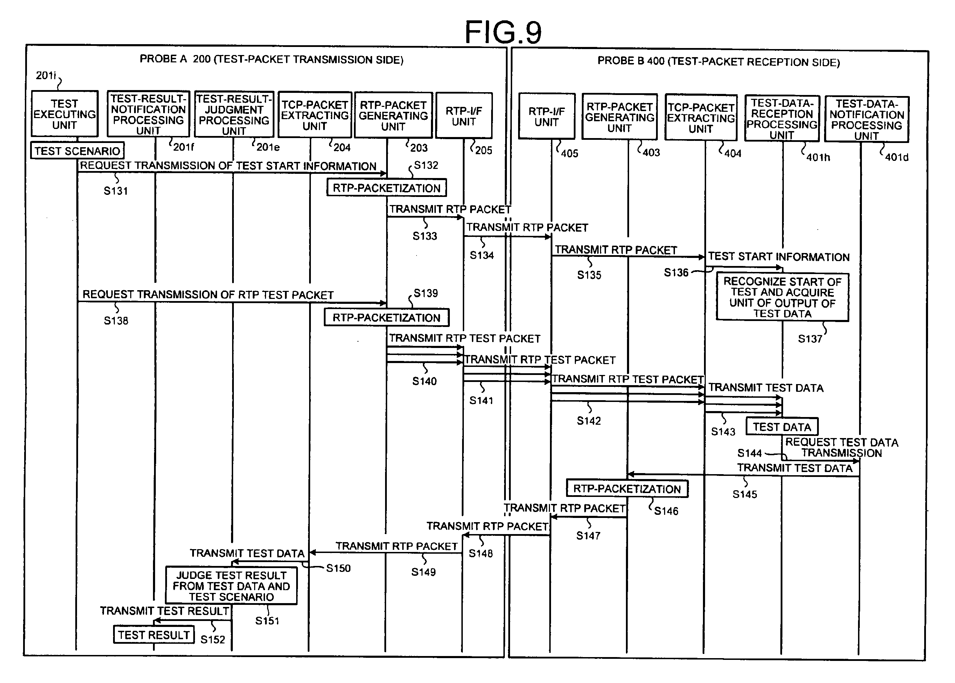

Fig. 9 is a sequence diagram of the RTP-test-packet transmission processing according to the first embodiment. The probe A 200 is set as a test-packet transmission side probe and the probe B 400 is set as a test-packet reception side probe. As shown in the figure, the test executing unit 201i of the probe A 200 transmits a request for transmission of test start information based the test scenario (step S131). This request for transmission of test start information is RTP-depacketized by the RTP-packet generating unit 203 (step S132). This RTP packet is transmitted to the probe B 400 via the RTP-I/F unit 205 (steps S133 and S134).

The RTP packet received via an RTP-I/F unit 405 is transmitted to a TCP-packet extracting unit 404 (step S135), RTP-depacketized by the TCP-packet extracting unit 404, and, then, passed to the test-data-reception processing unit 401b (step S136). A test-data-reception processing unit 401h recognizes start of a test by receiving RTP-depacketized information and acquires a unit of output of test data (step S137).

The probe A 200 transmits a request for transmission of RTP test packet (step S138). This request for transmission of RTP test packet is RTP-packetized by the RTP packet generating unit 203 (step S139). This is transmitted to the probe B 400 via the RTP-I/F 2005 (steps S140 and S141).

When the probe B 400 receives a test packet via the RTP-I/F unit 405, the probe B 400 transmits this reception packet to the TCP-packet extracting unit 404 (step S142). The probe B 400 transmits test data obtained by performing RTP-depacketization of the reception packet in the TCP-packet extracting unit 404 to the test-data-reception processing unit 401h (step S143). The processing at steps S140 to S143 is repeated by the number of times of test packet transmission defined in the test scenario. In this way, test data is stored in the storing unit 202 of the probe B 400.

To transmit the test data stored in the storing unit 202 of the probe B 400 according to the repetition of the processing at steps S140 to S143 to the probe A 200, the test-data-reception processing unit 401h of the probe B 400 issues a request for test data transmission to a test-data-notification processing unit 401d (step S144). Based on this request, the test-data-notification processing unit 401d reads out the test data stored from the storing unit 202 and transmits the test data (step S145).

The test data transmitted from the test-data-notification processing unit 401d is RTP-packetized by an RTP-packet generating unit 403 (step S146). This RTP-packetized information is transmitted to the probe A 200 via the RTP-I/F unit 405 (steps S147 and S148).

The probe A 200 transmits the RTP packet received by the RTP-IF unit 205 to the TCP-packet extracting unit 204 (step S149). The TCP-packet extracting unit 204 extracts test data from the RTP packet received according to RTP-depacketization and transmits the test data to the test-result-judgment processing unit 201e (step S150). The test-result-judgment processing unit 201e, which has received the test data, judges a test result from the test data and the test scenario (step S151). A result of this judgment is transmitted to the test-result-notification processing unit 201f (step S152), stored in the storing unit 202, and displayed on the GUI of the terminal apparatus 900.

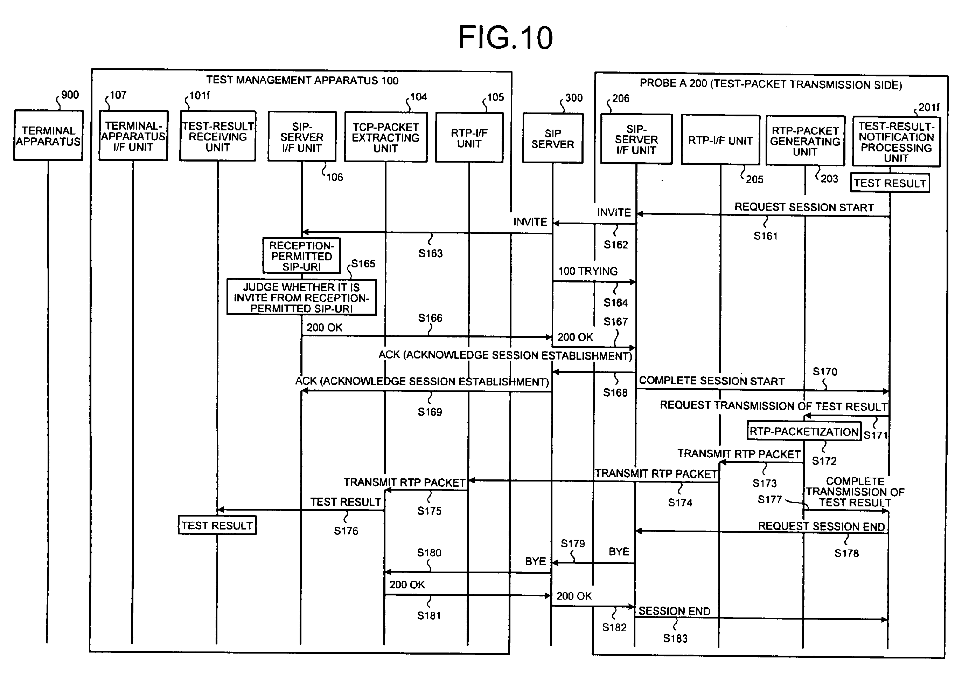

Fig. 10 is a sequence diagram of the test-result transmission processing according to the first embodiment. The probe A 200 is set as a test-packet transmission side probe. As shown in the figure, to transmit a test result, the test-result-notification processing unit 201f of the probe A 200 requests start of a session with the test management apparatus 100 (step S161). This request is transmitted from the SIP-server I/F unit 206 to the test management apparatus 100 through the SIP server 300 (steps S162 and S163). The session start request is returned to the probe A 200 as well (step S164).

In the test management apparatus 100, when the session start request is received via the SIP-server I/F unit 106, the SIP-URI reception-permission-judgment processing unit 101b judges, based on the reception-permitted SIP-URI stored, whether the session start request is a request from a SIP-URI permitted to receive information (step S165). The SIP-URI reception-permission-judgment processing unit 101b transmits information on permission of reception to the probe A 200 through the SIP server 300 (steps S166 and S167). The probe A 200, which has received this information on permission of reception, transmits ACK (acknowledgement of session establishment) to the test management apparatus 100 through the SIP server 300 (steps S168 and S169).

The test-result-notification processing unit 201f of the probe A 200 detects completion of the session start (step S170) and, then, outputs a request for test result transmission (step S171). The test-result-notification processing unit 201f RTP-packetizes this test result (step S172) and transmits the RTP packet to the test management apparatus 100 (steps S173 and S174). In the test management apparatus 100, which has received the test result, the test result received is transmitted to the TCP-packet extracting unit 104 (step S175). The test result RTP-depacketized by the TCP-packet extracting unit 104 is transmitted to the test-result receiving unit 101f (step S176). In this way, the test result reaches the test management apparatus 100.

When the transmission of the test result ends, the test-result-notification processing unit 201f of the probe A 200 detects completion of the test result transmission (step S177). Subsequently, a request for session end is transmitted to the test management apparatus 100 through the SIP server 300 (steps S178, S179, and S180).

When the test management apparatus 100 receives the request for session end, the test management apparatus 100 transmits information on permission of the session end to the probe A 200 through the SIP server 300 (steps S181 and S182). Finally, the test-result-notification processing unit 201f of the probe A 200 detects this information on permission of the session end (step S183). In this way, the processing for transmitting the test result from the probe A 200 to the test management apparatus 100 ends.

According to the first embodiment, it possible to transmit and receive, even under an environment in which communication of protocols other than a specific packet is regulated by a security policy, intersystem communication information, which can be transmitted by protocols other than the specific packet, among apparatuses arranged on a network.

In particular, the voice-quality evaluating system using the present invention is capable of transmitting and receiving, even under an environment in which protocols other than a voice packet is regulated according to a security policy such as a voice-only network, test result information, test start information, test control information, test scenario information, time synchronization information, and firmware information among apparatuses (the test management apparatus 100, probes or IP telephones, etc.) arranged on the network.

Since it is possible to instruct transmission of a test scenario from a remote location and the probes automatically performs a voice quality evaluation test based on this test scenario, it is possible to control the voice quality evaluation test from the remote location.

The system according to the first embodiment has been devised to solve the following problem. Even when TCP socket communication and HTTP/HTTPS communication are possible, in a system in which there are a plurality of communication objects and relocation and extension of connected apparatuses are frequently performed, setting of a firewall may have to be changed every time dislocation or extension of the communication objects is performed. This is inconvenient in terms of system operation.

According to the first embodiment, the voice-quality evaluating system uses the SIP server 300 to solve the following problem. Each apparatus that could act as the reception side of data (the test management apparatus 100 and the probes) has a transmission path security function using the SIP and a communication function using the RTP packet. Therefore, apparatuses having these functions can start communication even if the apparatuses are not legitimate apparatuses. However, since the apparatuses carry out functions of the voice-quality evaluating system, transmission of data from malicious apparatuses has to be excluded. Accordingly, it is necessary to make it possible to select a transmission side apparatus that is allowed to perform communication.

For example, in the voice-quality evaluating system, it is necessary to extend or relocate the probes according to a section in which it is desired to perform a test. The probes notify the test management apparatus 100 of a test result using a TCP socket or HTTP/HTTPS. At the same time, the probes receive a test scenario, latest firmware, and time synchronization information from the test management apparatus 100. Usually, since the probes are placed in a service network zone (a core router network and an access network), a firewall is placed between the test management apparatus 100 and the probes.

Therefore, a TCP port used between the test management apparatus 100 and the probes has to be opened. Setting of the firewall has to be changed to cause the TCP socket to pass through the firewall. The workload due to this increases as the number of probes increases. When the TCP port is opened, more problems of security occur.

The system according to the first embodiment can prevent problems of security from occurring because it enables opening the TCP port without requiring a procedure for setting passage permission of a TCP socket in a firewall. Moreover, since a SIP-URI of the transmission side apparatus for data is judged, it is possible to receive only data from legitimate transmission side apparatuses without performing data reception from transmission side apparatuses not permitted to transmit data.

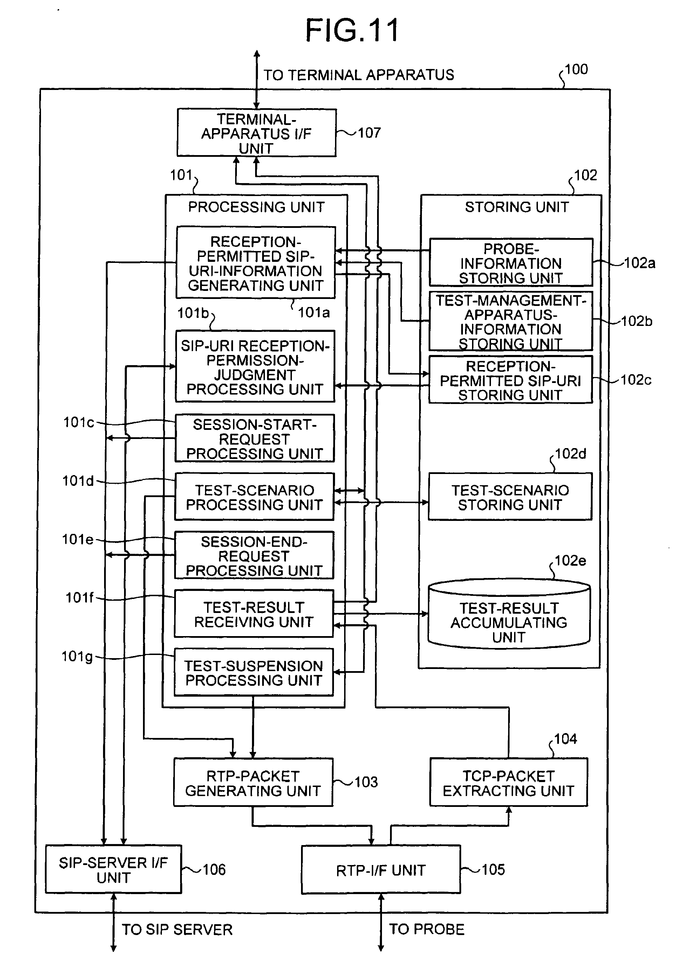

A second embodiment of the present invention including a test suspending function is explained with reference to Figs. 11 to 14. A network structure and structures and functions of respective apparatuses according to the second embodiment are identical with those according to the first embodiment except that the test management apparatus 100 and the probe A 200 and the probe B 400 have structures for the test suspending function and perform processing for test suspension.

Fig. 11 is a block diagram of the test management apparatus 100 according to the second embodiment. As shown in the figure, the test management apparatus 100 according to the second embodiment further includes a test-suspension processing unit 101g in the processing unit 101. Except this difference, the test management apparatus 100 according to the second embodiment is identical with the test management apparatus 100 according to the first embodiment.

The test-suspension processing unit 101g transmits an instruction for test suspension to the probes based on a test suspension instruction input from the terminal apparatus 900. This instruction is RTP-packetized by the RTP-packet generating unit 103 and, then, transmitted to the probes via the RTP-I/F unit 105.

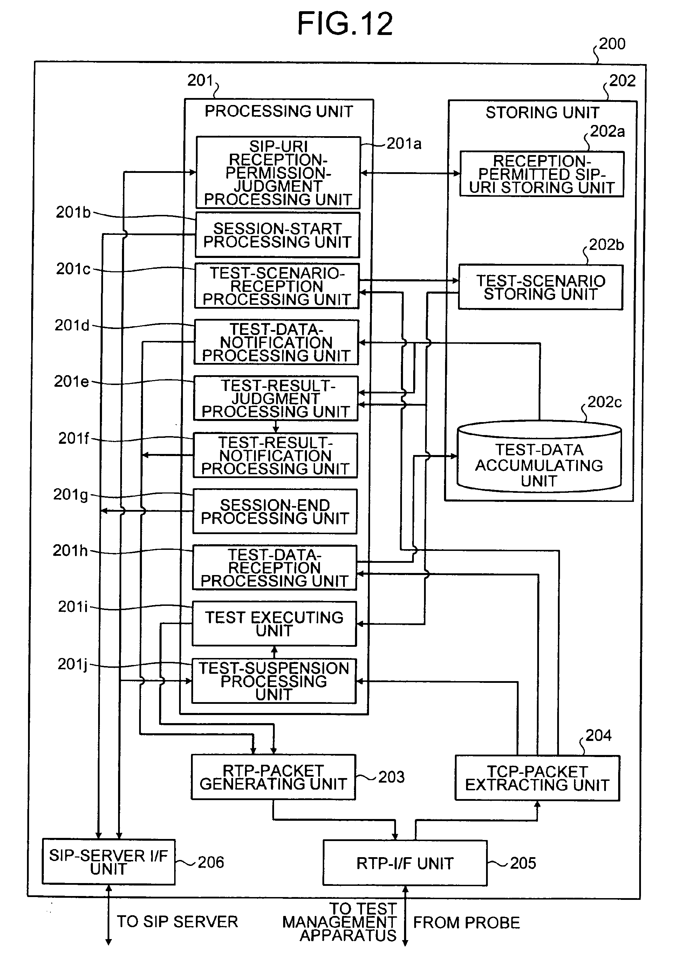

Fig. 12 is a block diagram of the probe A 200 according to the second embodiment. According to the second embodiment, as in the first embodiment, the structure of the probe B 400 is identical with the structure of the probe A 200. As shown in the figure, the probe A 200 according to the second embodiment further includes a test-suspension processing unit 201j in the processing unit 201 of the probe A 200 according to the first embodiment. Except this difference, the probe A 200 according to the second embodiment is identical with the probe A 200 according to the first embodiment.

The test-suspension processing unit 201j outputs an instruction for test suspension to the test executing unit 201i based on a test suspension instruction received from the test management apparatus 100. This instruction is received from a test-packet transmission side probe via the RTP-I/F unit 205, depacketized by the RTP-packet extracting unit 204, and, then, received by the test-suspension processing unit 201j. The test-suspension processing unit 201j, which has received this instruction, instructs the test executing unit 201i to suspend a test.

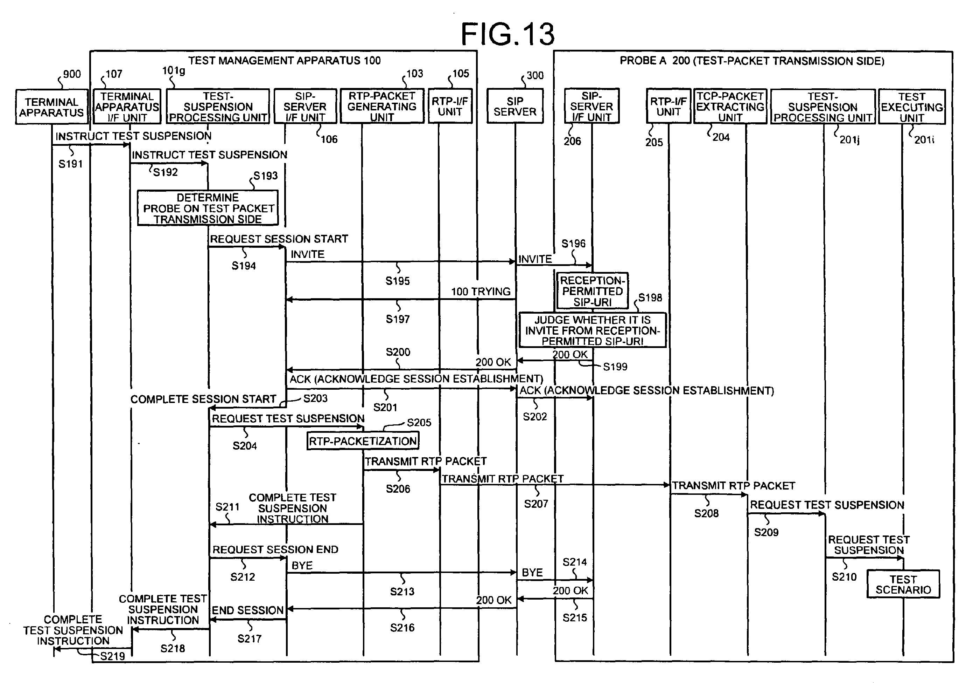

Fig. 13 is a sequence diagram of the test suspension processing between the test management apparatus 100 and the probe A 200 according to the second embodiment. The probe A 200 is set as a test-packet transmission side probe. As shown in the figure, a test suspension instruction is input from the terminal apparatus 900 (step S191). The test-suspension-processing unit 101g detects the test suspension instruction received via the terminal-apparatus I/F unit 107 of the test management apparatus 100 (step S192).

The SIP-URI reception-permission-judgment processing unit 101b determines a test-packet transmission side probe based on a test scenario (step S193). The SIP-URI reception-permission-judgment processing unit 101b requests the SIP server 300 that the session-start-request processing unit 101c start a session with the transmission side probe (steps S194 and S195). In response to this request, the SIP server 300 transmits the request to the probe A 200 (step S196) and notifies the test management apparatus 100 that the request is received (step S197).

In the probe A 200, the SIP-URI reception-permission-judgment processing unit 201a judges, based on the reception-permitted SIP-URI stored, whether the request is a request from a SIP-URI permitted to receive information (step S198). The SIP-URI reception-permission-judgment processing unit 201a transmits information on permission of reception to the test management apparatus 100 through the SIP server 300 (steps S199 and S200). The test management apparatus 100, which has received this information on permission of reception, transmits ACK (acknowledgment of session establishment) to the probe A 200 through the SIP server 300 (steps S201 and S202).

The processing unit 101 of the test management apparatus 100 detects completion of the session start (step S203) and, then, outputs a request for test suspension (step S204). The processing unit 101 RTP-packetizes this test suspension request (step S205) and transmits the RTP packet to the probe A 200 (steps S206 and S207). In the probe A 200, which has received the test suspension request, the test suspension request received is transmitted to the TCP-packet extracting unit 204 (step S208). The test suspension request RTP-depacketized by the TCP-packet extracting unit 204 is transmitted to the test-suspension processing unit 201j (step S209). The test-suspension processing unit 201j passes the test suspension request received to the test executing unit 201i (step S210). Test suspension is executed.

When the transmission of the test suspension request ends, the processing unit 101 of the test management apparatus 100 detects completion of the test suspension instruction (step S211). Subsequently, the processing unit 101 transmits a request for session end to the probe A 200 through the SIP server 300 (steps S212, S213, and S214).

When the probe A 200 receives the request for session end, the probe A 200 transmits information on permission of the session end to the test management apparatus 100 through the SIP server 300 (steps S215 and S216). Finally, the processing unit 101 detects this information on permission of the session end (step S217). When the processing unit 101 detects the session end, the processing unit 101 transmits information on completion of the test suspension instruction to the terminal apparatus 900 via the terminal-apparatus I/F unit 107 (steps S218 and S219). In this way, the processing for transmitting the test suspension instruction to the probe A 200 is completed.

The test suspension processing is explained as being executed based on a test suspension instruction of an operator of the voice evaluation system. However, the present invention is not limited to this. Test suspension may be executed in association with a test scenario or the test management apparatus 100 may execute test suspension based on cooperation with other systems.

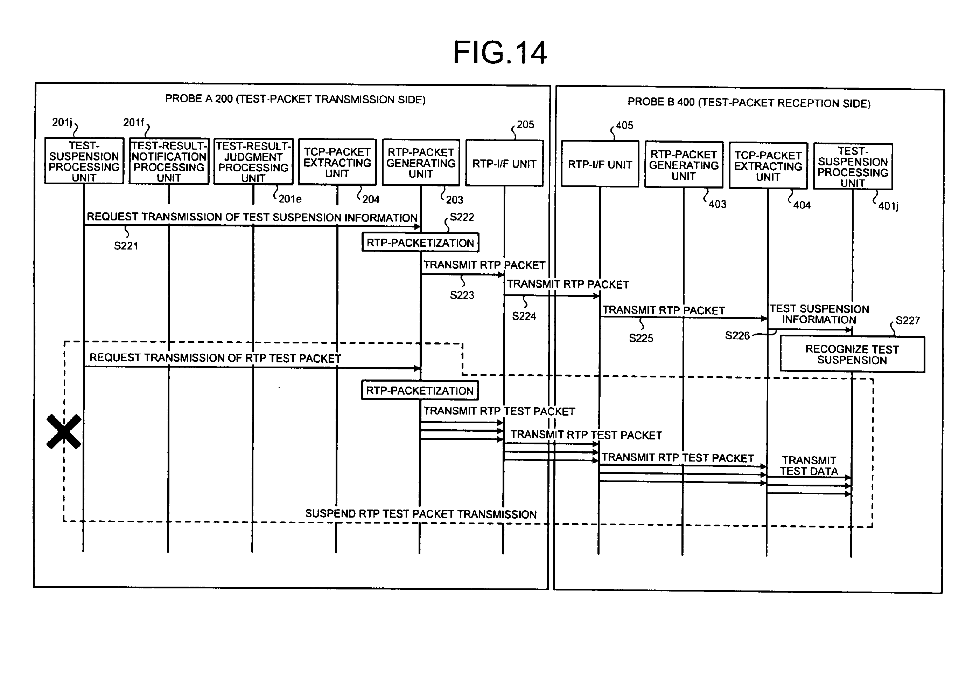

Fig. 14 is a sequence diagram of the test suspension processing between the probe A 200 and the probe B 400 according to the second embodiment. The probe A 200 is set as a test-packet transmission side probe and the probe B 400 is set as a test-packet reception side probe. As shown in the figure, the test-suspension processing unit 201j of the probe A 200 transmits a request for test suspension information transmission (step S221). This request for test suspension information transmission is RTP-packetized by the RTP-packet generating unit 203 (step S222). This RTP packet is transmitted to the probe B 400 via the RTP-I/F unit 205 (steps S223 and S224).

The RTP packet including request information for test suspension received via the RTP-I/F unit 405 is transmitted to the TCP-packet extracting unit 404 (step S225), RTP-depacketized by the TCP-packet extracting unit 404, and, then, passed to a test-suspension processing unit 401j (step S226). The test-suspension processing unit 401j recognizes the test suspension by receiving the information RTP-depacketized (step S227). Through the processing, transmission of test packets from the probe A 200 to the probe B 400 after that are entirely cancelled. According to the second embodiment, it is possible to instruct test suspension from a remote location.

Suspension processing is also possible for a session via the SIP server 300 between the test management apparatus 100 and the probe A 200. Thus, it is also possible to perform transmission suspension processing in test-scenario transmission processing.

In general, the suspension processing is also possible for a session among apparatuses via the SIP server 300. In other words, the suspension processing is also possible in processing for embedding intersystem communication information in a payload of an RTP packet and transmitting the RTP packet among the apparatuses via the SIP server 300. Thus, for example, it is also possible to perform the transmission suspension processing in transmission processing for test result information, test start information, test control information, test scenario information, synchronization time information, firmware update information, and the like between the probe A 200 and the probe B 400.

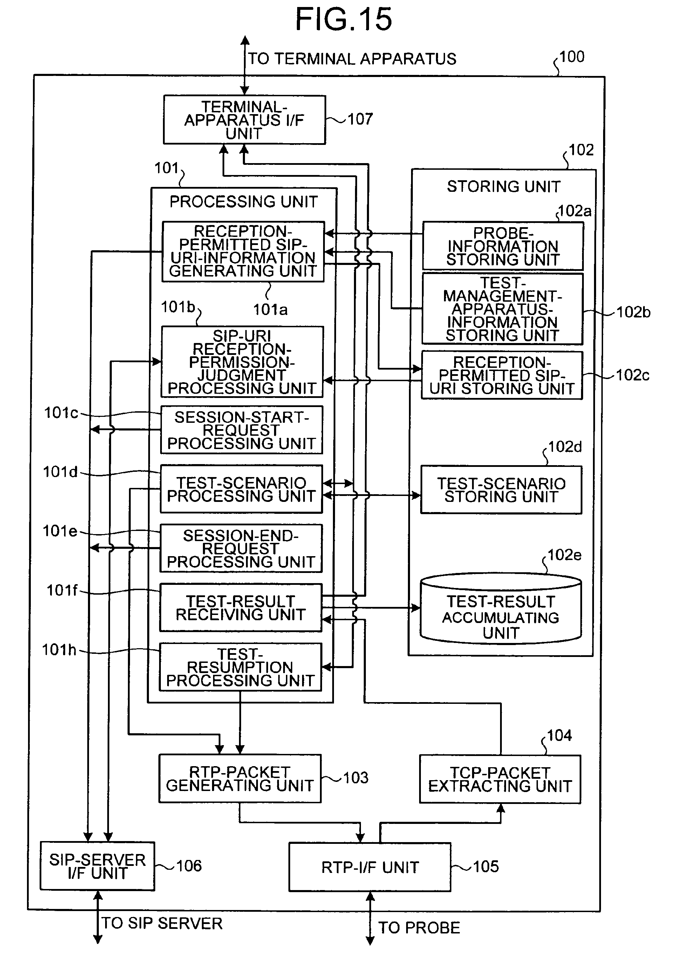

A third embodiment of the present invention including a test resuming function is explained with reference to Figs. 15 to 18. A network structure and structures and functions of respective apparatuses according to the third embodiment are identical with those according to the first embodiment except that the test management apparatus 100 and the probe A 200 and the probe B 400 have structures for the test resuming function and perform processing for test resumption. The test resuming function is used for resuming a test when execution of the test is suspended by a failure or the like or when execution of the test is suspended by an operator of the voice evaluation system as described according to the second embodiment.

Fig. 15 is a block diagram of the test management apparatus 100 according to the third embodiment. As shown in the figure, the test management apparatus 100 according to the third embodiment further includes a test-resumption processing unit 101h in the processing unit 101 of the test management apparatus 100 according to the first embodiment. Except this difference, the test management apparatus 100 according to the third embodiment is identical with the test management apparatus 100 according to the first embodiment.

The test-resumption processing unit 101h transmits an instruction for test resumption to probes based on a test resumption instruction input from the terminal apparatus 900. This instruction is RTP-packetized by the RTP-packet generating unit 103 and, then, transmitted to the probes via the RTP-I/F unit 105.

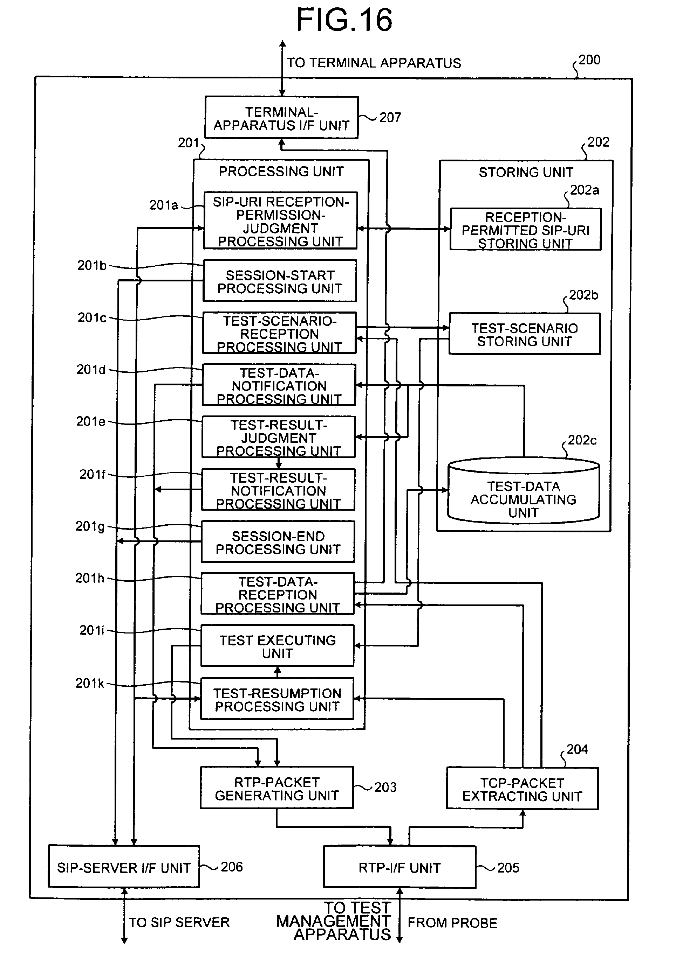

Fig. 16 is a block diagram of the probe A 200 according to the third embodiment. According to the third embodiment, as in the first and the second embodiments, a structure of the probe B 400 is identical with the structure of the probe A 200. As shown in the figure, the probe A 200 according to the third embodiment further includes a test-resumption processing unit 201k in the processing unit 201 of the probe A 200. Except this difference, the probe A 200 according to the third embodiment is identical with the probe A 200 according to the first embodiment.

The test-resumption processing unit 201k outputs an instruction for test resumption to the test executing unit 201i based on a test resumption instruction received from the test management apparatus 100. This instruction is received from a test-packet transmission side probe via the RTP-I/F unit 205, RTP-depacketized by the RTP-packet extracting unit 204, and, then, received by the test-resumption processing unit 201k. The test-resumption processing unit 201k, which has received this instruction, instructs the test executing unit 201i to resume a test.

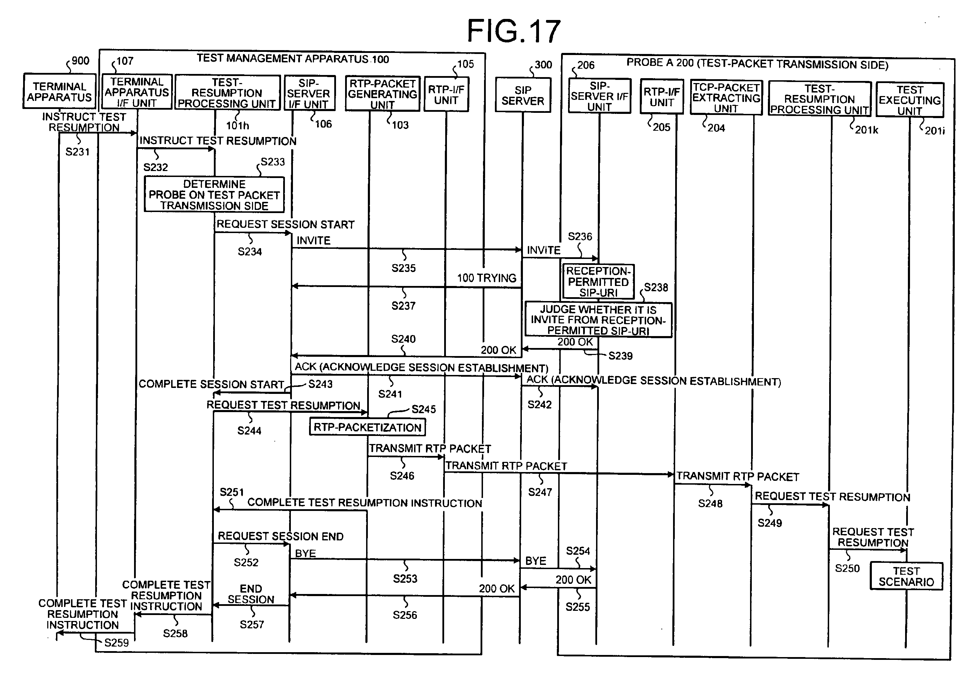

Fig. 17 a sequence diagram of the test resumption processing between the test management apparatus 100 and the probe A 200 according to the third embodiment. The probe A 200 is set as a test-packet transmission side probe. As shown in the figure, first, a test resumption instruction is input from the terminal apparatus 900 (step S231). The test-resumption processing unit 101h detects the test resumption instruction received via the terminal-apparatus I/F unit 107 of the test management apparatus 100 (step S232).

The SIP-URI reception-permission-judgment processing unit 101b determines a test-packet transmission side probe based on a test scenario (step S233) and requests the SIP server 300 that the session-start-request processing unit 101c start a session with the transmission side probe (steps S234 and S235). In response to this request, the SIP server 300 transmits the request to the probe A 200 (step S236) and notifies the test management apparatus 100 that the request is received (step S237).

In the probe A 200, the SIP-URI reception-permission-judgment processing unit 201a judges, based on the reception-permitted SIP-URI stored, whether the request is a request from a SIP-URI permitted to receive information (step S238). The SIP-URI reception-permission-judgment processing unit 201a transmits information on permission of reception to the test management apparatus 100 through the SIP server 300 (steps S239 and S240). The test management apparatus 100, which has received this information on permission of reception, transmits ACK (acknowledgment of session establishment) to the probe A 200 through the SIP server 300 (steps S241 and S242).

The processing unit 101 of the test management apparatus 100 detects completion of the session start (step S243) and, then, outputs a request for test resumption (step S244). The processing unit 101 RTP-packetizes this test resumption request (step S245) and transmits the RTP packet to the probe A 200 (steps S246 and S247). In the probe A 200, which has received the test resumption request, the test resumption request received is transmitted to the TCP-packet extracting unit 204 (step S248). The test resumption request RTP-depacketized by the TCP-packet extracting unit 204 is transmitted to the test-resumption processing unit 201k (step S249). The test-resumption processing unit 201k passes the test resumption request received to the test executing unit 201i (step S250), and the test resumption is executed.

When the transmission of the test resumption request ends, the processing unit 101 of the test management apparatus 100 detects completion of the test resumption instruction (step S251). Subsequently, the processing unit 101 transmits a request for session end to the probe A 200 through the SIP server 300 (steps S252, S253, and S254).

When the probe A 200 receives the request for session end, the probe A 200 transmits information on permission of the session end to the test management apparatus 100 through the SIP server 300 (steps S255 and S256). Finally, the processing unit 101 detects this information on permission of the session end (step S257). When the processing unit 101 detects the session end, the processing unit 101 transmits information on completion of the test resumption instruction to the terminal apparatus 900 via the terminal-apparatus I/F unit 107 (steps S258 and S259). In this way, the processing for transmitting the test resumption instruction to the probe A 200 is completed.

The test resumption processing is explained as being executed based on a test resumption instruction of an operator of the voice evaluation system. However, the present invention is not limited to this. Test resumption may be executed in association with a test scenario or the test management apparatus 100 may execute test resumption based on cooperation with other systems.

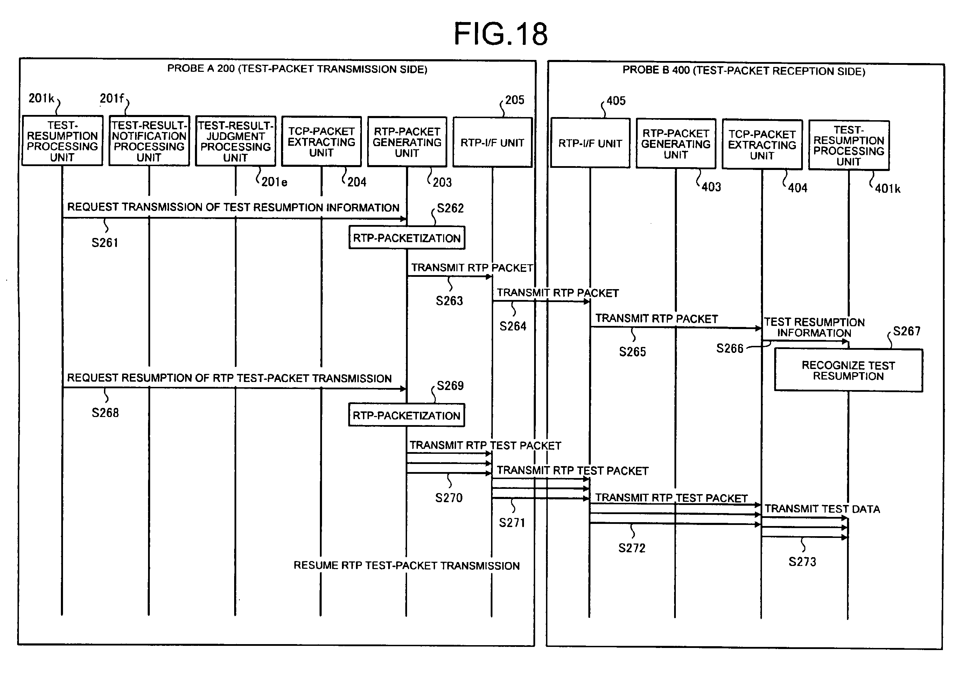

Fig. 18 is a sequence diagram of the test resumption processing between the probe A 200 and the probe B 400 according to the third embodiment. The probe A 200 is set as a test-packet transmission side probe and the probe B 400 is set as a test-packet reception side probe. As shown in the figure, the test-resumption processing unit 201k of the probe A 200 transmits a request for test resumption information transmission (step S261). This request for test resumption information transmission is RTP-packetized by the RTP-packet generating unit 203 (step S262). This RTP packet is transmitted to the probe B 400 via the RTP-I/F unit 205 (steps S263 and S264).

The RTP packet including request information for test resumption received via the RTP-I/F unit 405 is transmitted to the TCP-packet extracting unit 404 (step S265), RTP-depacketized by the TCP-packet extracting unit 404, and, then, passed to a test-resumption processing unit 401k (step S266). The test-resumption processing unit 401k recognizes the test resumption by receiving the information RTP-depacketized (step S267).

The probe A 200 transmits a request for RTP test packet transmission resumption (step S268). This request for RTP test packet transmission resumption is RTP-packetized by the RTP-packet generating unit 203 (step S269). This RTP packet is transmitted to the probe B 400 via the RTP-I/F unit 205 (steps S270 and S271).

When the probe B 400 receives a test packet via the RTP-I/F unit 405, the probe B 400 transmits this reception packet to the TCP-packet extracting unit 404 (step S272). The probe B 400 transmits test data obtained by performing RTP-depacketization of the reception packet in the TCP-packet extracting unit 404 to the test-resumption processing unit 401k (step S273). This processing at steps S270 to S273 is repeated by the number of times of test packet transmission defined in the test scenario. In this way, transmission of the suspended test packet is resumed. According to the third embodiment, it is possible to instruct test resumption from a remote location.

Resumption processing is also possible for a session via the SIP server 300 between the test management apparatus 100 and the probe A 200. Thus, it is also possible to perform transmission resumption processing in test-scenario transmission processing.

In general, the resumption processing is also possible for a session among apparatuses via the SIP server 300. In other words, the resumption processing is also possible in processing for embedding intersystem communication information in a payload of an RTP packet and transmitting the RTP packet among the apparatuses via the SIP server 300. Thus, for example, it is also possible to perform the transmission resumption processing in transmission processing for test result information, test start information, test control information, test scenario information, synchronization time information, firmware update information, and the like between the probe A 200 and the probe B 400.

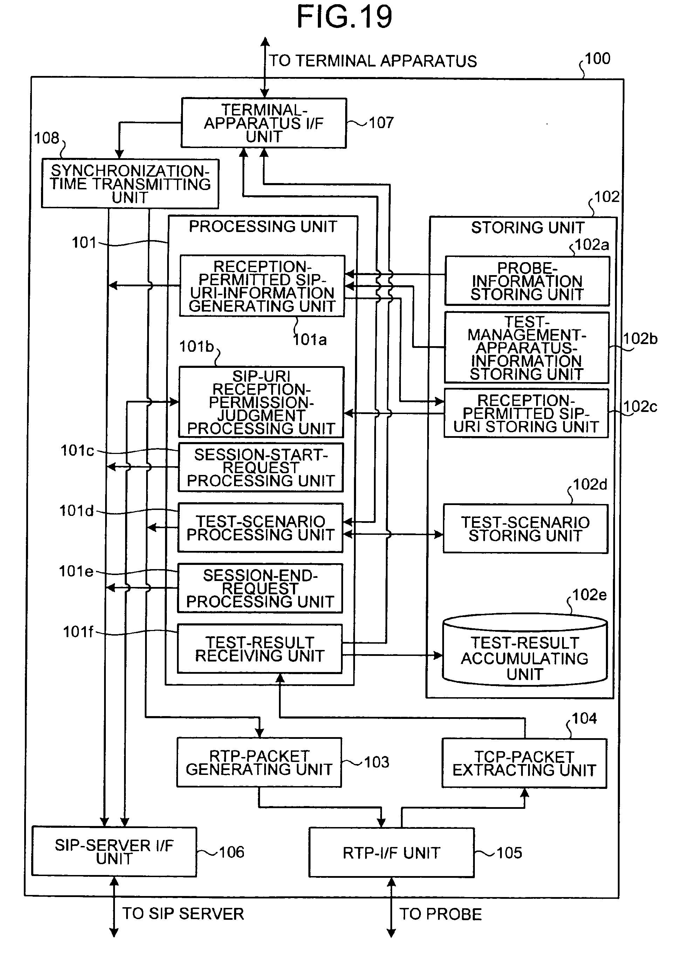

A fourth embodiment of the present invention including a time synchronizing function is explained with reference to Figs. 19 to 21. A network structure and structures and functions of respective apparatuses according to the fourth embodiment are identical with those in the first embodiment except that the test management apparatus 100 and the probe A 200 and the probe B 400 have structures for the time synchronizing function and perform processing for time synchronization. The time synchronizing function is used for synchronizing system time of apparatuses that could be arranged in the voice evaluation system.

Fig. 19 is a block diagram of the test management apparatus 100 according to the fourth embodiment. As shown in the figure, the test management apparatus 100 according to the fourth embodiment further includes a synchronization-time transmitting unit 108 in the test management apparatus 100 according to the first embodiment. Except this difference, the test management apparatus 100 according to the fourth embodiment is identical with the test management apparatus 100 according to the first embodiment.

The synchronization-time transmitting unit 108 transmits an instruction for time synchronization to probes based on a time synchronization start instruction input from the terminal apparatus 900. Prior to transmission of this time synchronization instruction to probes subjected to the time synchronization, session establishment by a SIP via the SIP server 300 is executed. The time synchronization instruction and synchronization time information are RTP-packetized by the RTP-packet generating unit 103 and, then, transmitted to the probes via the RTP-I/F unit 105.

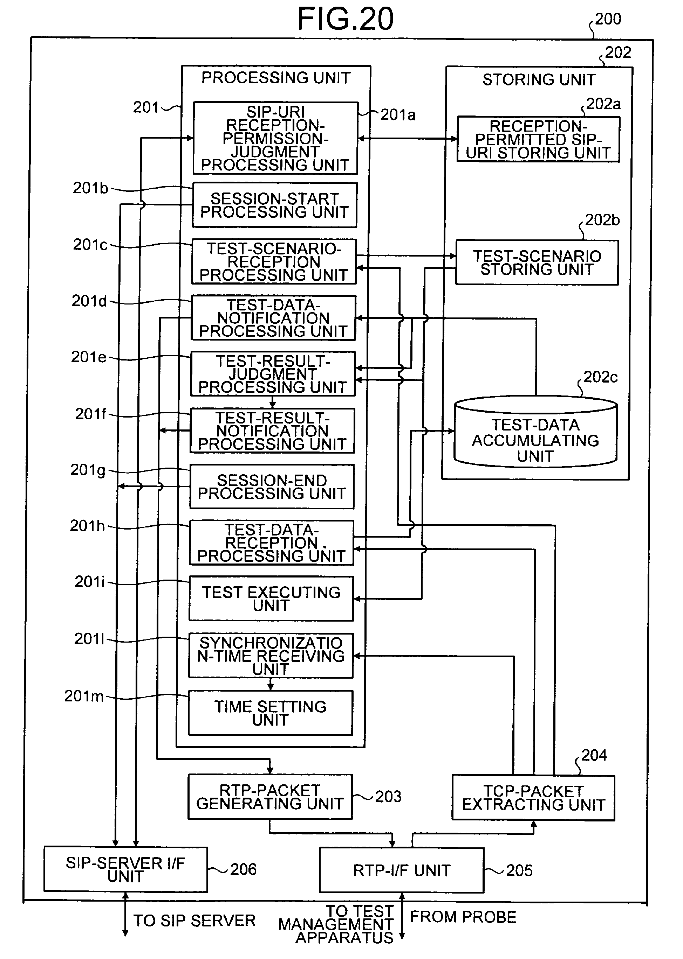

Fig. 20 is a block diagram of the probe A 200 according to the fourth embodiment. According to the fourth embodiment, as in the first to the third embodiments, a structure of the probe B 400 is identical with the structure of the probe A 200. As shown in the figure, the probe A 200 according to the fourth embodiment further includes a synchronization-time receiving unit 2011 and a time setting unit 201m in the processing unit 201 of the probe A 200. Except this difference, the probe A 200 according to the fourth embodiment is identical with the probe A 200 according to the first embodiment.

The synchronization-time receiving unit 2011 outputs an instruction for time synchronization to the time setting unit 201m based on a time synchronization instruction received from the test management apparatus 100. This instruction is received from a test-packet transmission side probe via the RTP-I/F unit 205, RTP-depacketized by the RTP-packet extracting unit 204, and, then, received by the synchronization-time receiving unit 2011. The synchronization-time receiving unit 2011, which has received this instruction, instructs the time setting unit 201m to synchronize system time.

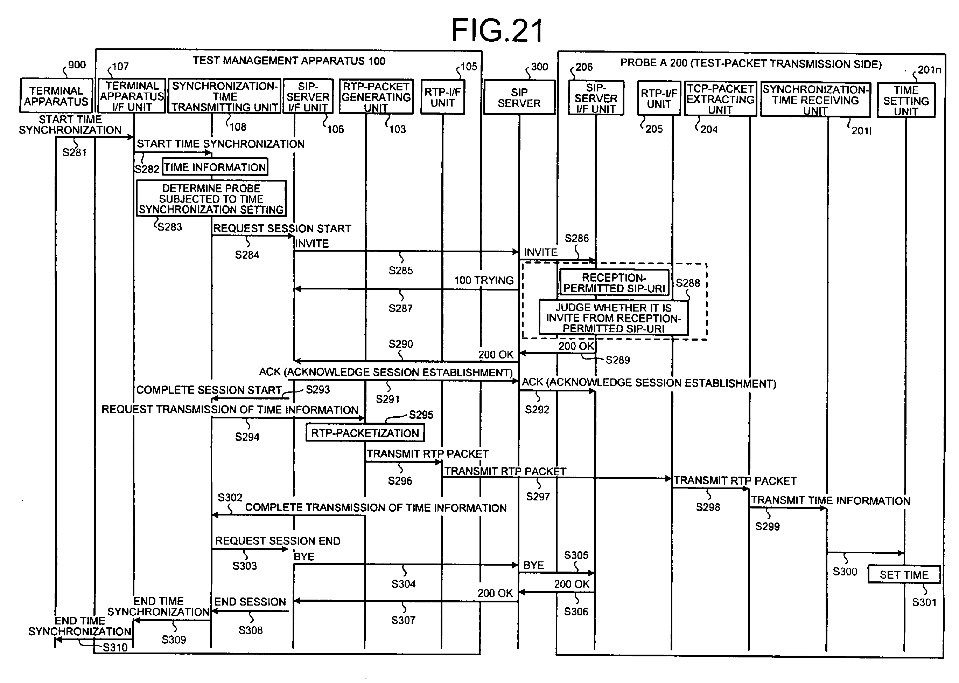

Fig. 21 is a sequence diagram of the time synchronization processing between the test management apparatus 100 and the probe A 200 according to the fourth embodiment. The probe A 200 is set as a test-packet transmission side probe. As shown in the figure, first, an instruction for time synchronization start is input from the terminal apparatus 900 (step S281). The synchronization-time transmitting unit 108 recognizes the synchronization time information received via the terminal-apparatus I/F unit 107 of the test management apparatus 100 (step S282).

The synchronization-time transmitting unit 108 determines a transmission destination probe of the synchronization time information (step S283) and requests the SIP server 300 to start a session with the transmission destination probe (steps S284 and S285). In response to this request, the SIP server 300 transmits the request to the probe A 200 (step S286) and notifies the test management apparatus 100 that the request is received (step S287).

In the probe A 200, the SIP-URI reception-permission-judgment processing unit 201a judges, based on the reception-permitted SIP-URI stored, whether the request is a request from a SIP-URI permitted to receive information (step S288). The SIP-URI reception-permission-judgment processing unit 201a transmits information on permission of reception to the test management apparatus 100 through the SIP server 300 (steps S289 and S290). The test management apparatus 100, which has received this information on permission of reception, transmits ACK (acknowledgment of session establishment) to the probe A 200 through the SIP server 300 (steps S291 and S292).

The processing unit 101 of the test management apparatus 100 detects completion of the session start (step S293) and, then, outputs a request for synchronization time information transmission (step S294). The processing unit 101 RTP-packetizes this synchronization time information (step S295) and transmits the RTP packet to the probe A 200 (steps S296 and S297). In the probe A 200, which has received the synchronization time information, the synchronization time information received is transmitted to the TCP-packet extracting unit 204 (step S298). The synchronization time information RTP-depacketized by the TCP-packet extracting unit 204 is transmitted to the synchronization-time receiving unit 2011 (step S299).

The synchronization-time receiving unit 2011 transmits the synchronization time information received to the time setting unit 201m (step S300). The time setting unit 201m updates system time of the probe A 200 based on this synchronization time information (step S301).

When the transmission of the synchronization time information ends, the synchronization-time transmitting unit 108 of the test management apparatus 100 detects completion of the synchronization time information transmission (step S302). Subsequently, the synchronization-time transmitting unit 108 transmits a request for session end to the probe A 200 through the SIP server 300 (steps S303, S304, and S305).

When the probe A 200 receives the request for session end, the probe A 200 transmits information on permission of the session end to the test management apparatus 100 through the SIP server 300 (steps S306 and S307). Finally, the synchronization-time transmitting unit 108 detects this information on permission of the session end (step S308). When the synchronization-time transmitting unit 108 detects the session end, the synchronization-time transmitting unit 108 transmits information on completion of the test resumption instruction to the terminal apparatus 900 via the terminal-apparatus I/F unit 107 (steps S309 and S310). In this way, the processing for system time synchronization with the probe A 200 of the test management apparatus 100 is completed. According to the fourth embodiment, it is possible to perform processing for system time synchronization from a remote location.

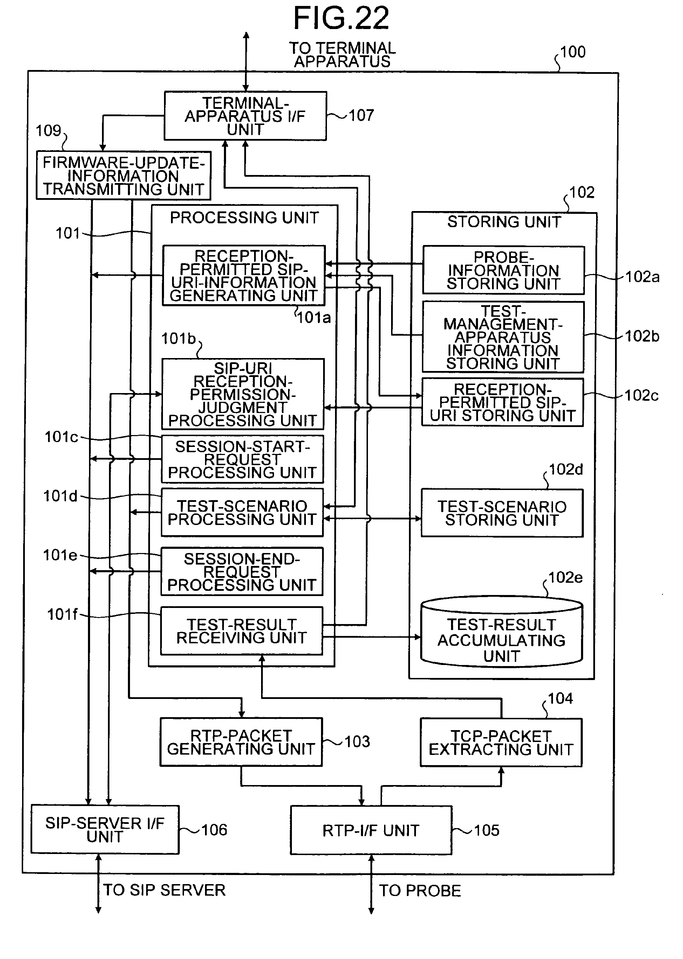

A fifth embodiment of the present invention including a firmware update function is explained with reference to Figs. 22 to 24. A network structure and structures and functions of respective apparatuses according to the fifth embodiment are identical with those in the first embodiment except that the test management apparatus 100 and the probe A 200 and the probe B 400 have structures for the firmware update function and perform processing for firmware update. The firmware update function is used for performing update of firmware that controls operations of apparatuses arranged in the voice evaluation system.

Fig. 22 is a block diagram of the test management apparatus 100 according to the fifth embodiment. As shown in the figure, the test management apparatus 100 according to the fifth embodiment further includes a firmware-update-information transmitting unit 109 in the processing unit 101 of the test management apparatus 100 according to the first embodiment. Except this difference, the test management apparatus 100 according to the fifth embodiment is identical with the test management apparatus 100 according to the first embodiment.

The firmware-update-information transmitting unit 109 transmits an instruction for firmware update to probes based on a firmware update start instruction input from the terminal apparatus 900. Prior to transmission of this firmware update instruction to probes subjected to firmware update, session establishment by a SIP via the SIP server 300 is executed. The firmware update instruction and firmware update information are RTP-packetized by the RTP-packet generating unit 103 and, then, transmitted to the probes via the RTP-I/F unit 105.

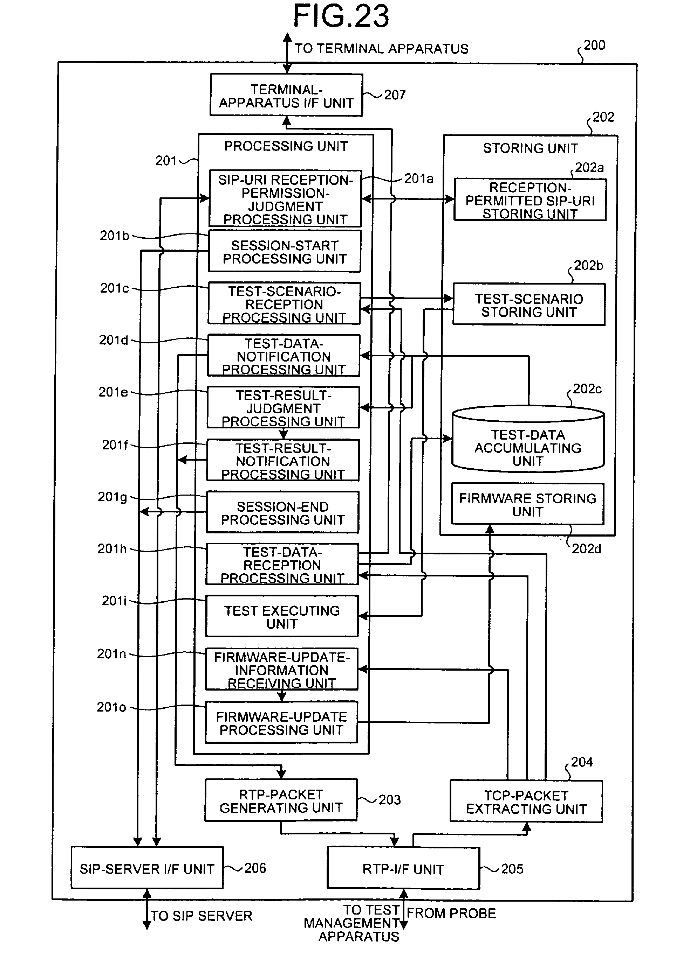

Fig. 23 is a block diagram of the probe A 200 according to the fifth embodiment. According to the fifth embodiment, as in the first to the fourth embodiments, a structure of the probe B 400 is identical with the structure of the probe A 200. As shown in the figure, the probe A 200 according to the fifth embodiment further includes a firmware-update-information receiving unit 201n and a firmware-update processing unit 201o in the processing unit 201 of the probe A 200. Except this difference, the probe A 200 according to the fifth embodiment is identical with the probe A 200 according to the first embodiment.

The firmware-update-information receiving unit 201n outputs an instruction for firmware update to the firmware-update processing unit 201o based on a firmware update instruction received from the test management apparatus 100. This instruction is received from a test-packet transmission side probe via the RTP-I/F unit 205, RTP-depacketized by the RTP-packet extracting unit 204, and, then, received by the firmware-update-information receiving unit 201n. The firmware-update-information receiving unit 201n, which has received this instruction, instructs the firmware-update processing unit 201o to update firmware stored in a firmware storing unit 202d of the storing unit 202.

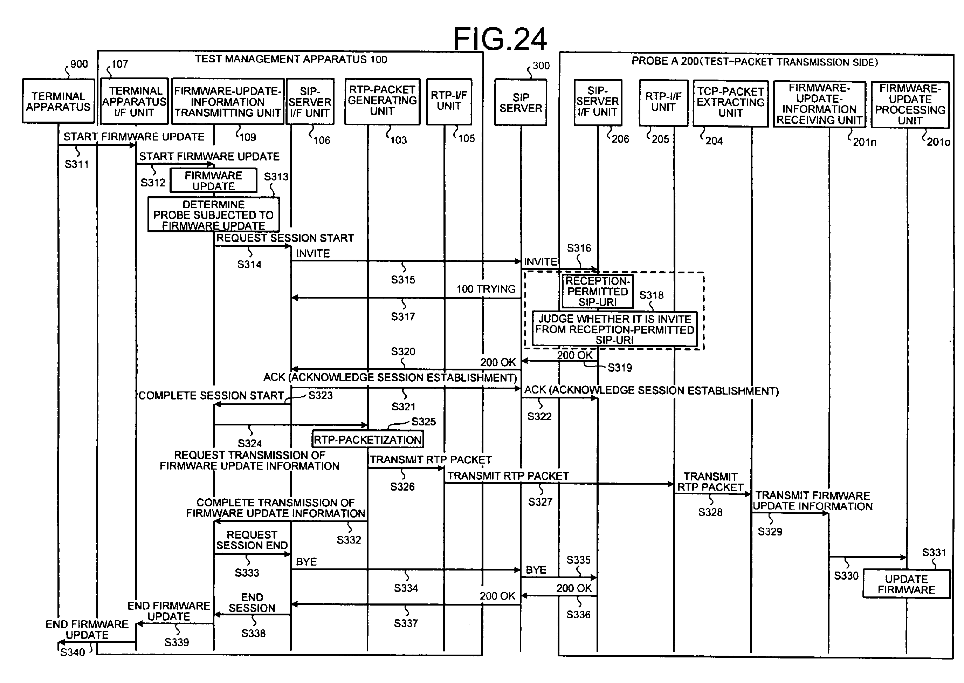

Fig. 24 is a sequence diagram of the firmware update processing between the test management apparatus 100 and the probe A 200 according to the fifth embodiment. The probe A 200 is set as a test-packet transmission side probe. As shown in the figure, first, a firmware update start instruction is input from the terminal apparatus 900 (step S311). The firmware-update-information transmitting unit 109 recognizes firmware update information received via the terminal-apparatus I/F unit 107 of the test management apparatus 100 (step S312).

The firmware-update-information transmitting unit 109 determines an update object probe (step S313) and requests the SIP server 300 to start a session with the update object probe (steps S314 and S315). In response to this request, the SIP server 300 transmits the request to the probe A 200 (step S316) and notifies the test management apparatus 100 that the request is received (step S317).

In the probe A 200, the SIP-URI reception-permission-judgment processing unit 201a judges, based on the reception-permitted SIP-URI stored, whether the request is a request from a SIP-URI permitted to receive information (step S318). The SIP-URI reception-permission-judgment processing unit 201a transmits information on permission of reception to the test management apparatus 100 through the SIP server 300 (steps S319 and S320). The test management apparatus 100, which has received this information on permission of reception, transmits ACK (acknowledgment of session establishment) to the probe A 200 through the SIP server 300 (steps S321 and S322).

The processing unit 101 of the test management apparatus 100 detects completion of the session start (step S323) and, then, outputs a request for firmware update information resumption (step S324). The processing unit 101 RTP-packetizes this firmware update information (step S325) and transmits the RTP packet to the probe A 200 (steps S326 and S327). In the probe A 200, which has received the firmware update information, the firmware update information received is transmitted to the TCP-packet extracting unit 204 (step S328). The firmware update information RTP-depacketized by the TCP-packet extracting unit 204 is transmitted to the firmware-update-information receiving unit 201n (step S329).

The firmware-update-information receiving unit 201n transmits the firmware update information received to the firmware-update-processing unit 201o (step S330). The firmware-update processing unit 201o updates the firmware of the probe A 200 based on this firmware update information (step S331).

When the transmission of the firmware update information ends, the firmware-update-information transmitting unit 109 of the test management apparatus 100 detects completion of the firmware update information transmission (step S332). Subsequently, the firmware-update-information transmitting unit 109 transmits a request for session end to the probe A 200 through the SIP server 300 (steps S333, S334, and S335).

When the probe A 200 receives the request for session end, the probe A 200 transmits information on permission of the session end to the test management apparatus 100 through the SIP server 300 (steps S336 and S337). Finally, the firmware-update-information transmitting unit 109 detects this information on permission of the session end (step S338). When the firmware-update-information transmitting unit 109 detects the session end, the firmware-update-information transmitting unit 109 transmits information on the end of the firmware update to the terminal apparatus 900 via the terminal-apparatus I/F unit 107 (steps S339 and S340). In this way, the processing for updating the firmware of the probe A 200 is completed. According to the fifth embodiment, it is possible to perform processing for updating firmware from a remote location.

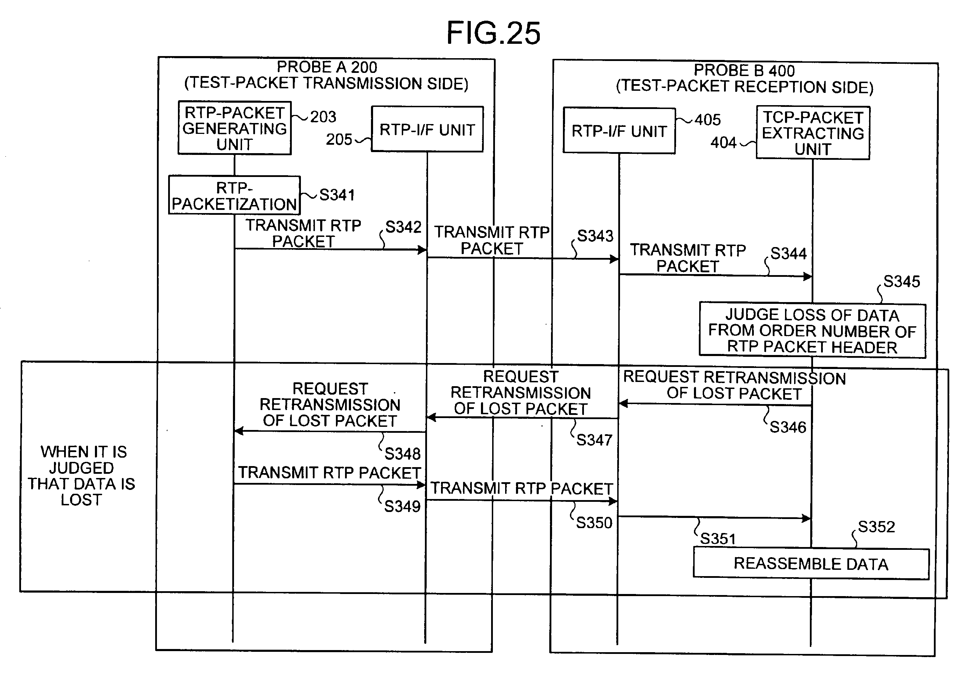

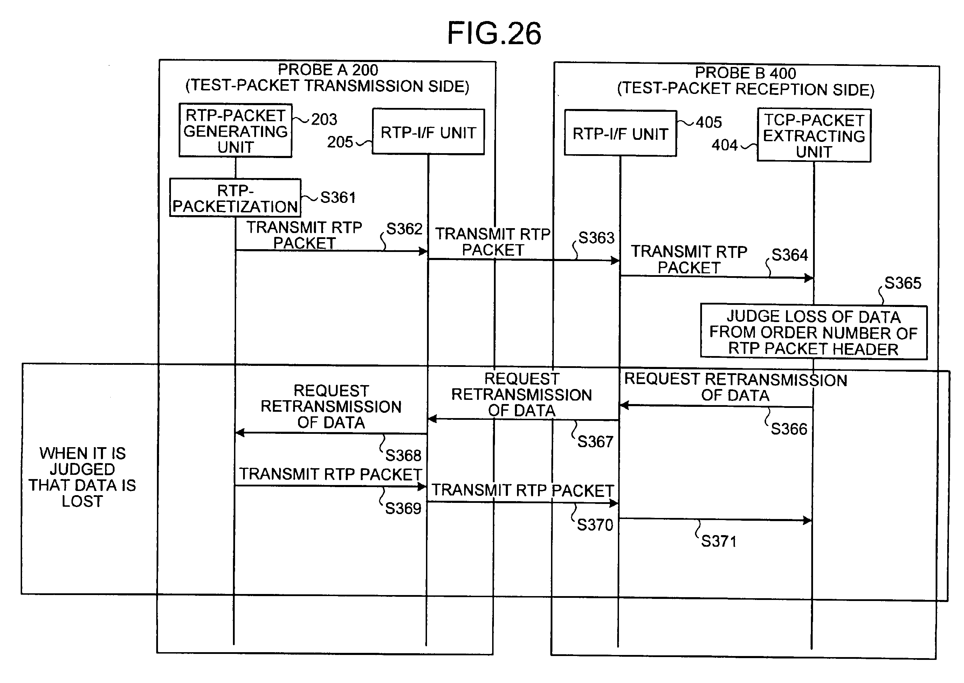

A sixth embodiment of the present invention including an RTP packet retransmitting function is explained with reference to Figs. 25 and 26. A network structure and structures and functions of respective apparatuses according to the sixth embodiment are identical with those in the first embodiment except that the RTP-packet generating unit 203 (or the RTP-packet generating unit 403) and the TCP-packet extracting unit 204 (or the TCP-packet extracting unit 404) of the probe A 200 (or the probe B 400) perform processing for the RTP-packet retransmitting function. According to the sixth embodiment, the probe A 200 is set as a test-packet transmission side probe and the probe B 400 is set as a test-packet reception side probe.

Fig. 25 is a sequence diagram of the RTP-packet-partial-retransmission processing according to the sixth embodiment. The RTP-packet generating unit 203 of the probe A 200 RTP-packetizes a test packet (step S341) and transmits this RTP packet to the probe B 400 via the RTP-I/F unit 205 (steps S342 and S343).

In the probe B 400, which has received the RTP packet via the RTP-I/F unit 405, this received (reception) packet is transmitted to the TCP-packet extracting unit 404 (step S344). The TCP-packet extracting unit 404 judges whether there is a loss of data from order information of an RTP packet header of the reception packet (step S345). When it is judged that there is a loss of data, the TCP-packet extracting unit 404 transmits a retransmission request for a lost sequence to the probe A 200 via the RTP-I/F unit 405 (steps S346 and S347).

In the probe A 200, which has received the lost sequence transmission request via the RTP-I/F unit 205, the request received is transmitted to the RTP-packet generating unit 203 (step S348). Based on this request, the RTP-packet generating unit 203 transmits (retransmits) the relevant RTP packet to the probe B 400 (steps S349 and S350). In the probe B 400, which has received the RTP packet retransmitted, the reception packet is transmitted to the TCP-packet extracting unit 404 (step S351). The TCP-packet extracting unit 404 reassembles data (step S352). In this way, when a loss of a packet occurs, the lost packet is retransmitted and reception data is reassembled.

Fig. 26 is a sequence diagram of the RTP-packet-entire-retransmission processing according to the sixth embodiment. First, the RTP-packet generating unit 203 of the probe A 200 RTP-packetizes a test packet (step S361) and transmits this RTP packet to the probe B 400 via the RTP-I/F unit 205 (steps S362 and S363).

In the probe B 400, which has received the RTP packet via the RTP-I/F unit 405, this received packet is transmitted to the TCP-packet extracting unit 404 (step S364). The TCP-packet extracting unit 404 judges whether there is a loss of data from order information of an RTP packet header of the reception packet (step S365). When it is judged that there is a loss of data, the TCP-packet extracting unit 404 transmits a retransmission request of the entire data to the probe A 200 via the RTP-I/F unit 405 (steps S366 and S367).

In the probe A 200, which has received the entire data retransmission request via the RTP-I/F unit 205, the request received is transmitted to the RTP-packet generating unit 203 (step S368). Based on this request, the RTP-packet generating unit 203 RTP-packetizes relevant data and retransmits the data to the probe B 400 (steps S369 and S370). In the probe B 400, which has received this retransmitted data, the reception data is transmitted to the TCP-packet extracting unit 404 (step S371). In this way, when a loss of a packet occurs, all the data is retransmitted. According to the sixth embodiment, when there is a loss of a reception RTP packet, it is possible to automatically perform retransmission processing for an RTP packet including a lost sequence or entire data. In particular, when only the lost sequence is retransmitted, it is possible to realize retransmission without increasing a load on a network. When the lost sequence occurs, in retransmitting an RTP packet including the entire data, it is possible to implement a retransmitting function with a simple mechanism without the necessity of processing for reassembling a packet.

The retransmitting function described according to the sixth embodiment is devised to solve the following problem. When a TCP packet is embedded in an RTP payload and transmitted and received, in general, an RTP is implemented on a user datagram protocol (UDP) to maintain a real time property. However, the UDP does not have the retransmitting function for a packet. Therefore, the RTP does not have the retransmitting function. This means that, since data that should originally be transmitted and received by a TCP having the retransmitting function is RTP-packetized, there is an inconvenience that the retransmitting function is lost. It is necessary to give the retransmitting function to the RTP as well to maintain reliability of communication.

Therefore, according to the sixth embodiment, it is possible to improve reliability of communication between the test management apparatus 100 and the probes or between the probes. It is possible to implement the retransmitting function described according to the sixth embodiment not only in the RTP but also in a communication protocol in general that does not originally have the retransmitting function.

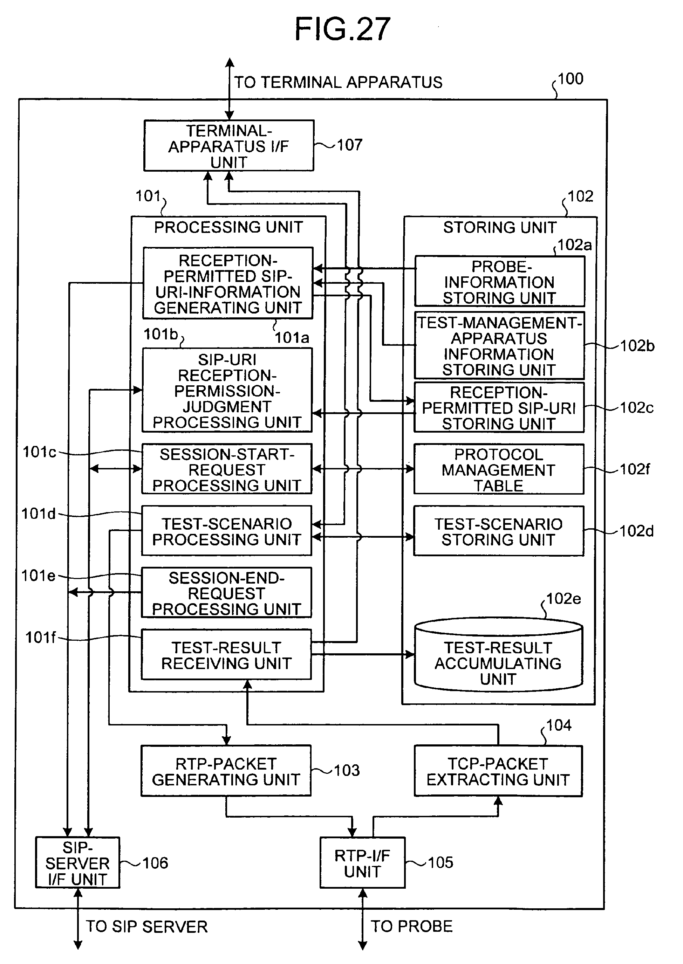

A seventh embodiment of the present invention including a protocol selecting function is explained with reference to Figs. 27 to 29. A network structure and structures and functions of respective apparatuses according to the seventh embodiment are identical with those in the first embodiment except that the session-start-request processing unit 101c performs processing for the protocol selecting function and the storing unit 102 further includes a protocol management table 102f. According to the seventh embodiment, the test management apparatus 100 selects a communication protocol in making connection to the probe A 200.

Fig. 27 is a block diagram of the test management apparatus 100 according to the seventh embodiment. As shown in the figure, in the test management apparatus 100 according to the seventh embodiment, the storing unit 102 of the test management apparatus 100 according to the first embodiment further includes the protocol management table 102f. In the test management apparatus 100 according to the seventh embodiment, the session-start-request processing unit 101c of the test management apparatus 100 according to the first embodiment further includes a function for the protocol selecting function. Except this difference, the test management apparatus 100 according to the seventh embodiment is identical with the test management apparatus 100 according to the first embodiment.

The session-start-request processing unit 101c preferentially selects a communication protocol for connection to the probes based on a connection protocol type for each of the probes stored in the protocol management table. When it is impossible to make connection based on the connection protocol type for each of the probes stored in the protocol management table 102f or when there is no storage of the connection protocol type for each of the probes, the session-start-request processing unit 101c sequentially attempts connection based on respective communication protocols based on a predetermined protocol type selection order.

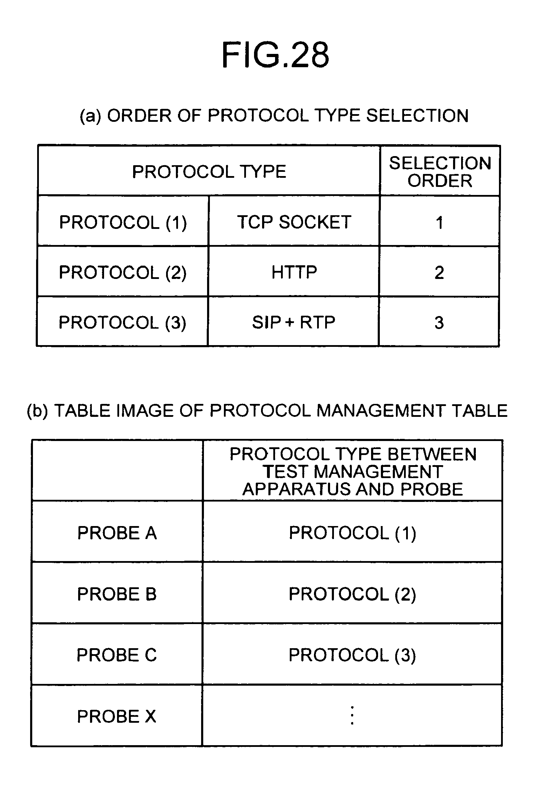

Fig. 28 is a table concerning the protocol type selection according to the seventh embodiment. As shown in (a) of Fig. 28, a priority of communication protocols for sequentially attempting connection is in an order of, for example, a protocol (1) (a TCP socket), a protocol (2) (HTTP) and a protocol (3) (SIP+RTP). This priority is only an example. It is possible to change the priority taking into account convenience of system operation. The priority of communication protocols may be changeable at any time according to operation by a system operator.

A table (b) of Fig. 28 is a table image of the protocol management table 102f. As shown in the figure, a communication protocol type of communication with the test management apparatus 100 is stored in the protocol management table 102f for each of the probes. For example, the probe A is stored as the protocol (1), the probe B is stored as the protocol (2), and the probe C is stored as the protocol (3). Communication protocols of communication with the respective probes are selected based on this storage. Communication protocols of session connection between the test management apparatus 100 and the respective probes are managed based on the storage of the protocol management table 102f.

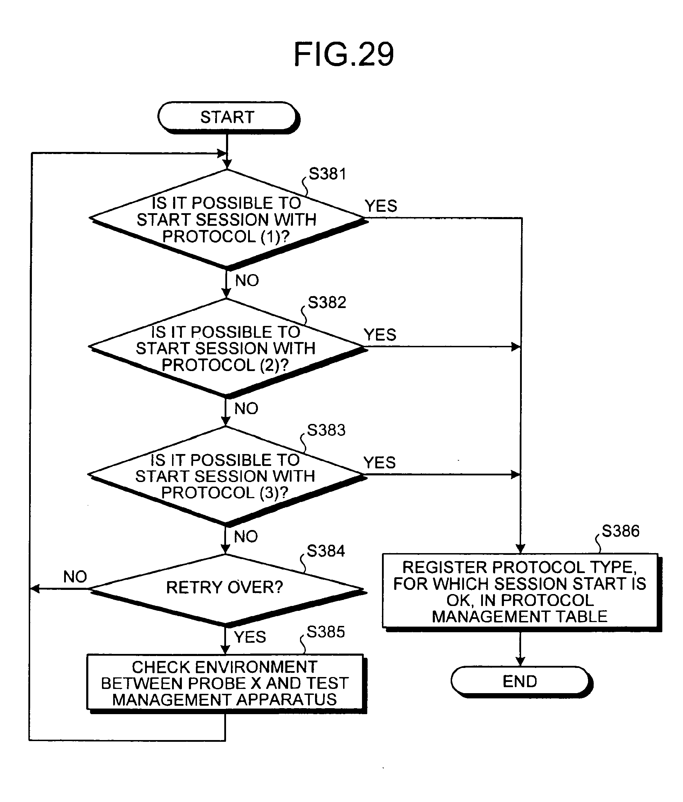

A protocol selection processing procedure performed when it is impossible to make connection based on the connection protocol type for each of the probes stored in the protocol management table 102f or when there is no storage of the connection protocol type for each of the probes is explained. Fig. 29 is a flowchart of the protocol selection processing procedure according to the seventh embodiment.

First, in starting a session with a probe X serving as a connection destination probe, the test management apparatus 100 judges whether it is possible to start the session with the protocol (1) (step S381). When it is possible to start the session with the protocol (1) ("Yes" at step S381), the test management apparatus 100 shifts the processing to step S386. When it is impossible to start the session with the protocol (1) ("No" at step S381), the test management apparatus 100 shifts the processing to step S382.

At step S382, in starting the session with the probe X, the test management apparatus 100 judges whether it is possible to start the session with the protocol (2) (step S382). When it is possible to start the session with the protocol (2) ("Yes" at step S382), the test management apparatus 100 shifts the processing to step S386. When it is impossible to start the session with the protocol 82) ("No" at step S382), the test management apparatus 100 shifts the processing to step S383.

At step S383, in starting the session with the probe X, the test management apparatus 100 judges whether it is possible to start the session with the protocol (3) (step S383). When it is possible to start the session with the protocol (3) ("Yes" at step S383), the test management apparatus 100 shifts the processing to step S386. When it is impossible to start the session with the protocol (3) ("No" at step S383), the test management apparatus 100 shifts the processing to step S384.

At step S384, the test management apparatus 100 judges whether the processing at steps S381 to S383 has been retried a predetermined number of times (step S384). When it is judged that the processing has been retried the predetermined number of times ("Yes" at step S384), the test management apparatus 100 checks a connection environment between the probe X and the test management apparatus 100 (step S385). When it is not judged that the processing has been retried the predetermined number of times ("No" at step S384), the test management apparatus 100 shifts the processing to step S381. On the other hand, at step S386, the test management apparatus 100 registers the protocol type, with which it is possible to start the session, in the protocol management table 102f. The protocol selection processing is completed. According to the seventh embodiment, it is possible to automatically select a communication protocol between the test management apparatus 100 and the probes. Moreover, by storing the communication protocol selected, it is possible to quickly perform session establishment after that.

The seventh embodiment has been devised to solve the following problem. Because of a structure of a network, a firewall set to allow a communication protocol different from the RTP such as the TCP or the HTTP/HTTPS to pass even if the SIP+RTP is not used may be present. The TCP or the HTTP/HTTPS could be a communication protocol for data communication. Even in such cases, the system needs to prevent occurrence of a problem due to a setting mistake of security by automatically selecting an optimum protocol.

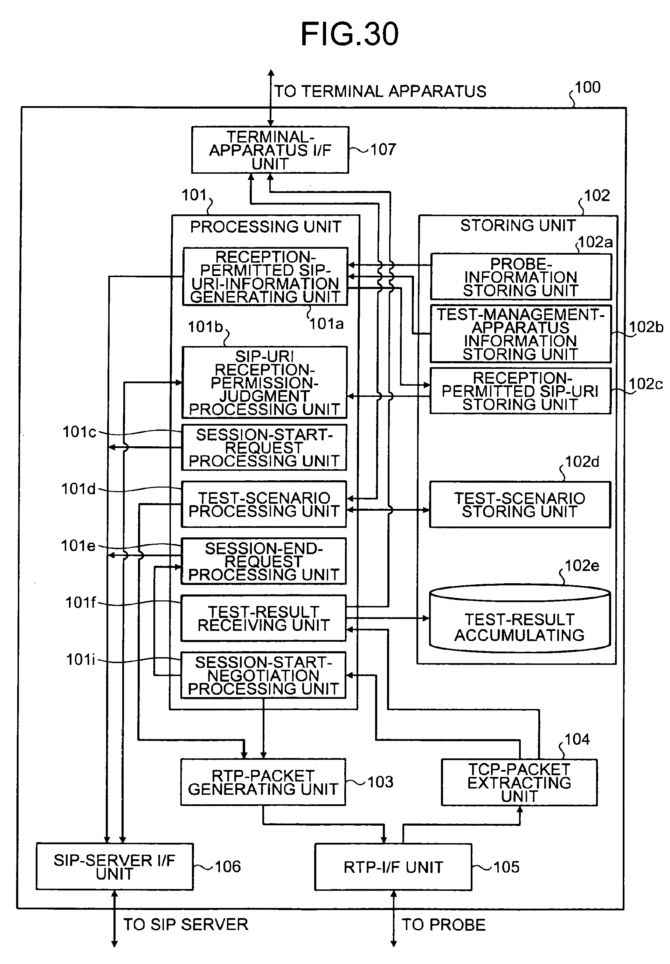

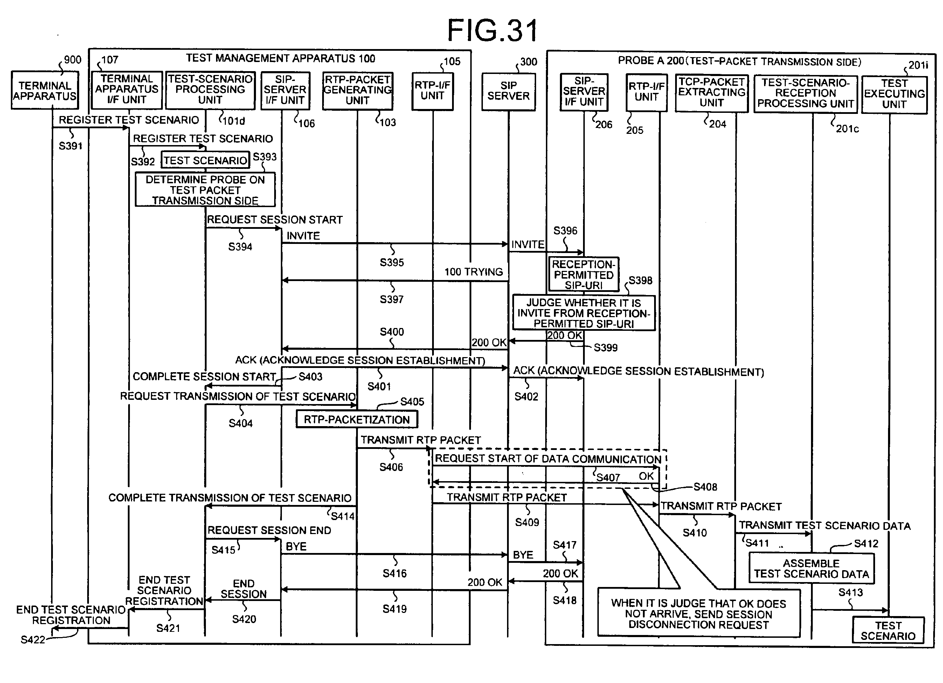

An eighth embodiment of the present invention including an RTP session start negotiation function is explained with reference to Figs. 30 and 31. A network structure and structures and functions of respective apparatuses according to the eighth embodiment are identical with those in the first embodiment except that the processing unit 101 of the test management apparatus 100 further includes a session-start-negotiation processing unit 101i. According to the eighth embodiment, the probe A 200 is set as a test-packet transmission side probe.

Fig. 30 is a block diagram of the test management apparatus 100 according to the eighth embodiment. As shown in the figure, in the test management apparatus 100 according to the eighth embodiment, the processing unit 101 of the test management apparatus 100 according to the first embodiment further includes the session-start-negotiation processing unit 101i. Except this difference, the test management apparatus 100 according to the eighth embodiment is identical with the test management apparatus 100 according to the first embodiment.

Prior to RTP packet transmission to the probe A 200, the session-start-negotiation processing unit 101i transmits a data transmission start request to the probe A 200. The session-start-negotiation processing unit 101i performs RTP packet transmission only when OK is returned from the probe A 200 in response to this request. When OK is not returned from the probe A 200 in response to the data transmission start request, the session-start-negotiation processing unit 101i instructs the session-end-request processing unit 101e to request the end of a session.

Fig. 31 is a sequence diagram of the session-start-negotiation processing between the test management apparatus 100 and the probe A 200 according to the eighth embodiment. The probe A 200 is set as a test-packet transmission side probe. It is possible to apply the present invention not only to the test-scenario-transmission processing but also to all kinds of RTP packet communication. As shown in the figure, first, the terminal apparatus 900 inputs a test scenario (step S391). The processing unit 101 registers the test scenario received via the terminal-apparatus I/F unit 107 of the test management apparatus 100 in the storing unit 102 (step S392).

The test-scenario processing unit 101d determines a test-packet transmission side probe based on the test scenario (step S393) and requests the SIP server 300 to start a session with the transmission side probe (steps S394 and S395). In response to this request, the SIP server 300 transmits the request to the probe A 200 (step S396) and notifies the test management apparatus 100 that the request is received (step S397).

In the probe A 200, the SIP-URI reception-permission-judgment processing unit 201a judges, based on the reception-permitted SIP-URI stored, whether the request is a request from a SIP-URI permitted to receive information (step S398). The SIP-URI reception-permission-judgment processing unit 201a transmits information on permission of reception to the test management apparatus 100 through the SIP server 300 (steps S399 and S400). The test management apparatus 100, which has received this information on permission of reception, transmits ACK (acknowledgement of session establishment) to the probe A 200 through the SIP server 300 (steps S401 and 5402).

The processing unit 101 of the test management apparatus 100 detects completion of the session start (step S403) and, then, outputs a test scenario transmission request (step S404). The processing unit 101 RTP-packetizes this test scenario (step S405) and transmits the RTP packet to the RTP-I/F unit 105 (step S406). Prior to transmitting this RTP-packetized test scenario to the probe A 200, the processing unit 101 transmits a data communication start request to the probe A 200 (step S407). If data communication may be started in response to this data communication start request, information on permission of data communication start is transmitted from an RTP-I/F unit 409 of the probe A 200 to the test management apparatus 100 (step S408). When it is not judged that OK at S408 has arrived, the test management apparatus 100 transmits a session disconnection request to the probe A 200.

When the information on permission of data communication start has arrived at the test management apparatus 100, the processing unit 101 transmits the RTP-packetized test scenario to the probe A 200 (steps S409 and S410). In the probe A 200, which has received the test scenario, the test scenario received is transmitted to the TCP-packet extracting unit 204 (step S410). The test scenario RTP-depacketized by the TCP-packet extracting unit 204 is transmitted to the test-scenario-reception processing unit 201c (step S411).

The test-scenario-reception processing unit 201c assembles a test scenario from a sequence of the test scenario received (step S412) and transmits this test scenario to the text executing unit 201i (step S413).

When the transmission of the test scenario ends, the processing unit 101 of the test management apparatus 100 detects completion of the test scenario transmission (step S414). Subsequently, the processing unit 101 transmits a session end request to the probe A 200 through the SIP server 300 (steps S415, S416, and S417).

When the probe A 200 receives the session end request, the probe A 200 transmits information on permission of session end to the test management apparatus 100 through the SIP server 300 (steps S418 and S419). Finally, the processing unit 101 detects this information on permission of session end (step S420). When the processing unit 101 detects the session end, the processing unit 101 transmits information on completion of test scenario registration to the terminal apparatus 900 via the terminal-apparatus I/F unit 107 (steps S421 and S422). By executing steps S407 and S408 between step S406 and S409, when a transmission destination is wrong when an RTP packet is transmitted to the probe A 200, it is possible to adopt, as voice data, a bit configuration that does not cause noise to smoothly end a session without causing noise.

The eighth embodiment has been devised to solve the following problem. When test data is erroneously transmitted to the wrong apparatus instead of to a reception side probe of the test data and, in particular, when the apparatus is an IP telephone, the test data is converted into voice data in this IP telephone. Since this voice data is not the original voice data, it is possible that the voice data reaches a receiver as noise. It is necessary to prevent such an accident and smoothly end operation.

As control information RTP-packetized and transmitted according to the first to the eighth embodiments, there are a test result, test start information, test control information (test suspension information, test resumption information, etc.), test scenario information, test end information, time synchronization information, firmware update information, and the like. However, the control information is not limited to these pieces of information.

According to the first to the eighth embodiments, as an example of application of the present invention, the voice quality evaluation test is described. However, it is possible to apply the present invention not only to the voice quality evaluation test but also to a node failure detection test, a communication test, a loop-back test, and the like.

According to the first to the eighth embodiments, the present invention is applied to the voice-quality evaluating system in which the test management apparatus 100, the probes, and the SIP server 300 are arranged. However, it is possible to apply the present invention not only to the voice-quality evaluating system but also to a communication system in general for performing communication using a voice packet in which communication apparatuses other than the test management apparatus 100, the probes, and the SIP server 300 are arranged. An RTP packet is used as a voice packet. However, it is possible to apply the present invention not only to the RTP packet but also to a voice packet in general. Moreover, intersystem communication control data is transmitted and received using a TCP packet. However, it is possible to apply the present invention not only to this TCP packet but also to a protocol in general that is capable of transmitting and receiving control data.

The first to the eighth embodiments have been explained. However, the present invention is not limited to these embodiments and may be carried out in more various different embodiments within the scope of the claims. Naturally, it is possible to simultaneously implement the first to the eighth embodiments. Effects of the present invention are not limited to the effects described in the first to the eighth embodiments.

According to an embodiment of the present invention, in the voice-quality evaluating system on the network for transmitting and receiving a voice packet, communication information for voice quality testing is embedded in a payload of the voice packet and transmitted and received. Thus, it is possible to easily perform the voice quality testing without changing a structure and setting of the network.

Furthermore, according to an embodiment of the present invention, in the voice-quality evaluating system on the network for transmitting and receiving a voice packet, a test scenario for voice quality testing is embedded in a payload of the voice packet and transmitted and received. Thus, it is possible to easily transmit and receive the test scenario without changing a structure and setting of the network.

Moreover, according to an embodiment of the present invention, the transmission path securing apparatus checks the connection source apparatus and secures a transmission path from the connection source apparatus to the connection destination apparatus. Moreover, communication information for securing the transmission path is embedded in a payload of a voice packet and transmitted and received. Thus, it is possible to easily secure a transmission path with the connection source apparatus checked.

Furthermore, according to an embodiment of the present invention, in the communication system that transmits and receives intersystem information on the network for transmitting and receiving a voice packet, the intersystem information is embedded in a payload of the voice packet and transmitted and received. Thus, it is possible to easily transmit and receive the intersystem information without changing a structure and setting of the network.

Moreover, according to an embodiment of the present invention, in the network in which a plurality of communication protocols are used jointly, it is possible to automatically select an optimum communication protocol and it is possible to prevent a mistake in setting a protocol and exclude connection by protocols, which are not permitted to make connection, to maintain security.

Furthermore, according to an embodiment of the present invention, in the communication system that transmits and receives intersystem information on a network for transmitting and receiving an RTP packet, the intersystem information is embedded in a payload of the RTP packet and transmitted and received. Thus, it is possible to easily transmit and receive the intersystem information without changing a structure and setting of the network.

Moreover, according to an embodiment of the present invention, when a lost sequence occurs, retransmission of an RTP packet including the lost sequence or the entire data is requested. Thus, it is possible to improve reliability of communication.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. A voice-quality evaluating system in a secure network that allows a voice packet to pass, the voice-quality evaluating system transmitting and receiving communication information for a voice quality testing between a test management apparatus and a test communication apparatus connected to the network and between the test communication apparatuses, for the voice quality testing between the test communication apparatuses arranged on the network, wherein
the voice-quality evaluating system embeds the communication information in a payload of the voice packet, and transmits and receives communication-information-embedded voice packet.

2. The voice-quality evaluating system according to claim 1, wherein
the test management apparatus transmits the communication-information-embedded voice packet to the test communication apparatus.

3. The voice-quality evaluating system according to claim 1 or 2, wherein
before starting the voice quality testing, the test management apparatus embeds a test scenario defining test details and test procedure of the voice quality testing executed by the test communication apparatuses in the payload of the voice packet and transmits the test-scenario-embedded voice packet to the test communication apparatus.

4. The voice-quality evaluating system according to claim 1, 2, or 3, wherein
the test communication apparatus transmits the communication-information-embedded voice packet to another test communication apparatus.

5. The voice-quality evaluating system according to any preceding claim, wherein
the network is configured in such a manner that an apparatus that is connected to the network or arranged on the network can be added or moved, and
a transmission-path securing apparatus that secures a transmission path from a connection source apparatus to a connection destination apparatus is further arranged on the network.

6. The voice-quality evaluating system according to claim 5, wherein
the connection destination apparatus includes a communication permitting unit that determines whether a communication start request is from a connection source apparatus that is to be permitted to perform a communication with the connection destination apparatus, and when it is determined that the communication start request is from the connection source apparatus that is to be permitted to perform the communication with the connection destination apparatus, permits start of the communication .

7. The voice-quality evaluating system according to claim 5, wherein
the connection destination apparatus determines whether the connection source apparatus is an apparatus permitted to perform a connection based on a uniform resource indicator of the connection source apparatus, and when it is determined that the connection source apparatus is an apparatus permitted to perform a connection, permits the connection.

8. The voice-quality evaluating system according to any preceding claim, wherein
a transmission side apparatus embeds synchronization time information in the payload of the voice packet and transmits the synchronization-time-information-embedded voice packet to a reception side apparatus connected to or arranged on the network, to perform time synchronization between the transmission side apparatus and the reception side apparatus.

9. The voice-quality evaluating system according to any preceding claim, wherein
a transmission side apparatus embeds firmware information in the payload of the voice packet and transmits the firmware-information-embedded voice packet to a reception side apparatus connected to or arranged on the network, to update firmware of the reception side apparatus.

10. A communication system in a secure network that allows a voice packet to pass, the communication system transmitting and receiving intersystem communication information between apparatuses connected to the network, wherein
the communication system embeds the intersystem communication information in a payload of the voice packet and transmits and receives the intersystem-communication-information-embedded voice packet.

11. The communication system according to claim 10, wherein
the network is configured in such a manner that an apparatus that is connected to the network or arranged on the network can be added or moved,
a transmission-path securing apparatus that secures a transmission path from a connection source apparatus to a connection destination apparatus by checking the connection destination apparatus to is further arranged on the network, and
when securing the transmission path through the transmission-path securing apparatus before starting a communication between a transmission side apparatus and a reception side apparatus, the communication system embeds, intersystem communication information for securing the transmission path in the payload of the voice packet and transmits and receives the intersystem-communication-information-embedded voice packet.

12. The communication system according to claim 10 or 11, comprising:
a communication-protocol selecting unit that selects a communication protocol for the communication, based on a communication protocol selection standard; and
a protocol managing unit that stores and manages the communication protocol selected by the communication-protocol selecting unit.

13. The communication system according to claim 10, 11, or 12, wherein
the voice packet transmitted from a transmission side apparatus to a reception side apparatus connected to or arranged on the network is a real-time transport protocol packet.

14. The communication system according to claim 13, wherein
the real-time transport protocol packet includes a plurality of sequences, and
the communication system further comprises a retransmission requesting unit that determines whether a part of the sequences is lost at a time of receiving the real-time transport protocol packet in the reception side apparatus, and when it is determined that a part of the sequences is lost, requests the transmission side apparatus to retransmit lost sequence or the real-time transport protocol packet.

15. The communication system according to claim 13 or 14, wherein
the transmission side apparatus starts transmission of the real-time transport protocol packet when the transmission side apparatus receives a permission from the reception side apparatus in response to a request for permission of the transmission of the real-time transport protocol packet.

16. The communication system according to claim 15, wherein
the transmission side apparatus suspends the transmission of the real-time transport protocol packet when the transmission side apparatus does not receive the permission from the reception side apparatus in response to the request for permission of the transmission of the real-time transport protocol packet.

17. A test management apparatus that manages voice quality testing between test communication apparatuses arranged on a network for transmitting and receiving a voice packet to perform communication for a voice call, wherein
the test management apparatus embeds communication information for the voice quality testing in a payload of the voice packet, and transmits the communication-information-embedded voice packet.

18. The test management apparatus according to claim 17, wherein
before starting the voice quality testing, the test management apparatus embeds a test scenario defining test details and test procedure of the voice quality testing executed by the test communication apparatuses in the payload of the voice packet and transmits the test-scenario-embedded voice packet to the test communication apparatus.

19. The test management apparatus according to claim 17 or 18, wherein
the test management apparatus embeds synchronization time information in the payload of the voice packet and transmits the synchronization-time-information-embedded voice packet to the test communication apparatuses arranged on the network.

20. The test management apparatus according to claim 17, 18, or 19, wherein
the test management apparatus embeds firmware information in the payload of the voice packet and transmits the firmware-information-embedded voice packet to the test communication apparatuses arranged on the network.

21. A test communication apparatus for performing voice quality testing on a network that transmits and receives a voice packet and performs communication for a voice call, wherein
the test communication apparatus embeds communication information for the voice quality testing in a payload of the voice packet communication-information-embedded voice packet to another test communication apparatus.

22. The test communication apparatus according to claim 21, wherein
the voice packet includes a plurality of sequences, and
the test communication apparatus comprises a retransmission requesting unit that determines whether a part of the sequences is lost at a time of receiving the communication information from the other test communication apparatus, and when it is determined that a part of the sequences is lost, requests the other test communication apparatuses to retransmit the lost sequence or the voice packet.

23. The test communication apparatus according to claim 21, wherein
the test communication apparatus starts transmission of the voice packet when the test communication apparatus receives a permission from the other test communication apparatuses in response to a request for permission of the transmission of the voice packet.

24. The test communication apparatus according to claim 21, 22, or 23, wherein
the test communication apparatus suspends transmission of the voice packet when the test communication apparatus does not receive a permission from the other test communication apparatuses in response to a request for permission of the transmission of the voice packet.
